# EUROPEAN PATENT SPECIFICATION

(11) **EP 1 552 664 B1**
(45) Date of publication and mention of the grant of the patent: **20.08.2008**
(21) Application number: 03776375.2
(22) Date of filing: 14.10.2003
(51) Int. Cl.: H04L 29/06, H04L 12/22

(54) **LIGHTWEIGHT EXTENSIBLE AUTHENTICATION PROTOCOL PASSWORD PREPROCESSING**
KOMPAKTE AUSDEHNBARE AUTHENTISIERUNGSPROTOKOLL-KENNWORTVORVERARBEITUNG
RETRAITEMENT PAR MOT DE PASSE DE PROTOCOLE D'AUTHENTIFICATION EXTENSIBLE LEGER

(30) Priority: 14.10.2002 US 270843
(43) Date of publication of application: 13.07.2005
(73) Proprietor: Cisco Technology, Inc., San Jose, CA 95134 (US)
(72) Inventor: ZORN, Glen, Seattle, WA 98102 (US); HALASZ, David, Stow, OH 44224 (US)
(74) Representative: Kazi, Ilya
(86) International application number: PCT/US2003/032551
(87) International publication number: WO 2004/036864

(56) References cited:
- US-A1- 2002 012 433
- ABOBA B.; SIMON D.: "PPP EAP TLS Authentication Protocol" NETWORK WORKING GROUP REQUEST FOR COMMENTS, [Online] October 1999 (1999-10), pages 1-23, XP002275651 Retrieved from the Internet: <URL:http://www.faqs.org/rfcs/rfc2716.html > [retrieved on 2004-03-30]

## Description

### BACKGROUND OF THE INVENTION

This invention is related to wireless devices operating in accordance with the IEEE 802.11 standard, and more specifically, to a wireless authentication protocol for the authentication of such devices to a network.

The conventional Extensible Authentication Protocol (EAP) was originally designed to provide a framework for allowing new authentication methods to be easily introduced into the Point-To-Point Protocol (PPP). Even though EAP was originally designed to operate as part of PPP, it is sufficiently flexible to be mapped to virtually any framed link layer. The IEEE 802. 1x EAP over LAN (EAPOL) specification defines a method for encapsulating EAP packets into either Ethernet or Token Ring packets such that the packets may be transmitted over a LAN.

The Wired Equivalent Privacy (WEP) protocol security services under the IEEE 802.11 specification provide for data traffic between a wireless client (or peer) and a network access server (NAS) to be encrypted using an encryption key. The WEP protocol uses a key to authenticate each client station. The client station must have a current key to access the network. The NAS, also called an access point (AP), also requires a key to be allowed access to the wireless network. Originally the AP would have a single key, which had to be programmed into each client radio transceiver, and all traffic in the wireless cell would be encrypted with the single key. Now, using EAP authentication, an AP (or equivalently, a centralized Authentication, Authorization, and Accounting (AAA) server) may independently derive a unique session key that is based upon user-specific data. Generation of the particular authentication protocols and key distribution protocols are left to vendors to develop.

The wireless AP often relies on the centralized AAA server to authenticate the clients on its behalf. One of the more popular types of AAA servers is a Remote Authentication Dial-In User Service server (RADIUS). Extensions to the RADIUS protocol have been defined to allow the transfer of EAP packets between the AAA server and the AP. In this case, the AP is just a relay agent in the authentication conversation that takes place between the wireless client and the RADIUS AAA server. The RADIUS server informs the AP of the result of the client authentication and whether to allow the client to access the network. Other parameters may be returned as well, including session keys for use between the client and the AP.

In the wireless environment, it is very easy for a rogue AP to masquerade as a valid AP, and capture all of the client traffic. Thus the client must be able to make sure it is connecting to the correct network. One way to eliminate this "man-in-the-middle" attack by the rogue AP is to incorporate mutual authentication such that the client verifies the identity of the AP, as well as the AP verifying the client.

Further, the protocol must be efficiently executable. A processor in most wireless transceiver radio cards is fairly simple, must be programmed in assembly language, and runs at a low clock speed compared to current host systems. Thus the protocol must be designed such that the code will fit in the code memory of the radio card. The algorithm must run in a reasonable amount of time so that normal data traffic is not blocked for too long a time, especially during roaming from one AP to another.

In the first implementations of EAP in the wireless LAN world, the authentication method used public key cryptography (PKI - Public Key Infrastructure). This is very compute intensive and is handled on the client side by the host processor of the computer in which the radio card is attached. The only other defined authentication method was too simple and did not provide mutual authentication. In order to provide support for embedded systems, such as printers, and for host machines running operating systems that did not have the support routines to allow the use of the PKI authentication, it was felt a new method was needed that could be embedded into the client radio card firmware. In this way, only very minimal host support was needed, that being to provide a username and password to the radio card.

The new protocol must incorporate ease of integration with RADIUS. Most RADIUS servers consist of a module that handles the actual RADIUS protocol, interfaces with one or more back-end database modules, and performs the actual verification of the client information. The new authentication scheme must be supported by a large number of the database modules. As well, since some form of the username and password information must be passed to the AP for generation of an encryption key, the protocol must take into account the types of information about the user password that the database modules are willing to release.

The Lightweight Extensible Authentication Protocol (LEAP) combines centralized two-way authentication with dynamic WEP keys. At this point in time, the typical LEAP implementation environment is in the NT environment, which environment utilizes an MD4 hash function to generate the session key. To ensure that LEAP can be utilized in other non-MD4 environments, what is needed is architecture that can accommodate alternative hash functions.

US 2002/0012433 discloses an authentication method for authenticating a mobile node to a packet network. The method uses a challenge-response approach between the mobile node and a network authentication center.

### SUMMARY OF THE INVENTION

In a first aspect, the invention provides a method of authenticating a client in a Lightweight Extensible Authentication Protocol Environment, the method comprising: receiving authentication request data from a client; retrieving a first password hash of a user password associated with a client username provided during login, the first password hash having been created using a first predetermined hash function; performing a second hash function on the first password hash, thereby creating a second password hash; and authenticating the client via the Lightweight Extensible Authentication Protocol using the second password hash.

The invention also provides a computer-readable medium as set out in claims 10 and 12, an authentication server as set out in claim 14, and a client device as set out in claim 19.

Embodiments of the invention provide a wireless authentication protocol for handling alternative hash functions in a LEAP environment. Authentication between a network and a client is managed by LEAP authentication. With advance knowledge of the alternative encoding scheme in both the client and network, implementation is by way of providing the alternative database on the network such that the authentication server can access the alternative database during the LEAP authentication process.

### BRIEF DESCRIPTION OF THE DRAWINGS

For a more complete understanding of the present invention and the advantages thereof, reference is now made to the following description taken in conjunction with the accompanying drawings, in which:
FIG. 1a illustrates a general block diagram of a system that utilizes the described LEAP protocol, in accordance with a disclosed embodiment;
FIG. 1b illustrates a general block diagram of an alternative embodiment system utilizing a switch and wireless client according to the described LEAP protocol;
FIG. 1c illustrates a general block diagram of an alternative embodiment wired system that utilizes the described protocol;
FIG. 2 illustrates a block diagram of general network entities and associated protocol modules of FIG. 1a;
FIG. 3 illustrates a general flow chart of the protocol process for mutual authentication between the wireless client and AS of FIG. 1a;
FIGURES 4a and 4b each illustrate a flow diagram of the LEAP encryption process for deriving a respective session key in the AS and the client, in accordance with a disclosed embodiment;
FIG. 5a illustrates a detailed flow chart of the challenge/response process from the perspective of the AS, according to a disclosed embodiment;
FIG. 5b illustrates a detailed flow chart of the challenge/response process from the perspective of the client, according to a disclosed embodiment;
FIGURES 6a and 6b illustrate a flow chart of the described protocol packet exchange between the authentication server and client, in accordance with a disclosed protocol embodiment;
FIG. 7 illustrates a block diagram of a hardware network interface device incorporating the LEAP algorithm for use in a wireless client that communicates with an access point, in accordance with a disclosed embodiment;
FIG. 8 illustrates a flow chart of password preprocessing in the AS implemented for an alternative password hash, according to a disclosed embodiment;
FIG. 9 illustrates a flow chart of password preprocessing in the client, according to a disclosed embodiment;
FIG. 10 illustrates a password preprocessing flow diagram of the LEAP encryption process for deriving a session key in the AS when utilizing a non-NT database implementation, in accordance with a disclosed embodiment; and
FIG. 11 illustrates a password preprocessing flow diagram of the LEAP encryption process for deriving a session key in the client when utilizing a non-NT database implementation, in accordance with a disclosed embodiment.

### DETAILED DESCRIPTION OF THE INVENTION

The disclosed wireless authentication protocol architecture provides for handling alternative hash functions in a Lightweight Extensible Authentication Protocol (LEAP) environment. Authentication between a network and a client is managed by LEAP authentication. With advance knowledge of the alternative encoding scheme in both the client and network, implementation is by way of providing the alternative database on the network such that the authentication server can access the alternative database during the LEAP authentication process.

The disclosed wireless authentication protocol also utilizes EAP, EAPOL, WEP, RADIUS, resides in the EAP, provides mutual authentication between the network infrastructure and the wireless client, offers secure derivation of random user-specific cryptographic session keys, provides compatibility with existing and widespread network authentication mechanisms (e.g., RADIUS), operates with computational speed, and provides a single sign-on capability that is compatible with popular vendor networking architectures, e.g., by Microsoft™. In that the disclosed wireless authentication protocol resides in EAP, it is hereinafter designated LEAP (Light Extensible Authentication Protocol). Additionally, the disclosed protocol eliminates the need to utilize a public/private key mechanism used in conventional systems. Elimination of the need for the public/private key provides a less computation-intensive protocol requiring less program code that allows the protocol engine to be programmed into smaller electronic components, for example, network interface cards having a variety of form factors.

The LEAP authentication protocol is suitable for use in IEEE 802.11 wireless local area network (WLAN) environments, and is based upon existing IETF (Internet Engineering Task Force) and IEEE (Institute of Electrical and Electronic Engineers, Inc.) standards. Since LEAP rides on top of standard protocols, this helps to provide an element of "future-proofing" for wireless LANs.

In accordance with the above advantages, the LEAP algorithm code is sufficiently small to be included in a wireless radio card. This allows for easy implementation of the protocol in a wide range of systems that support EAP and IEEE 802.1x. LEAP is suitable to run in 802.1x and provides for authentication and key management.

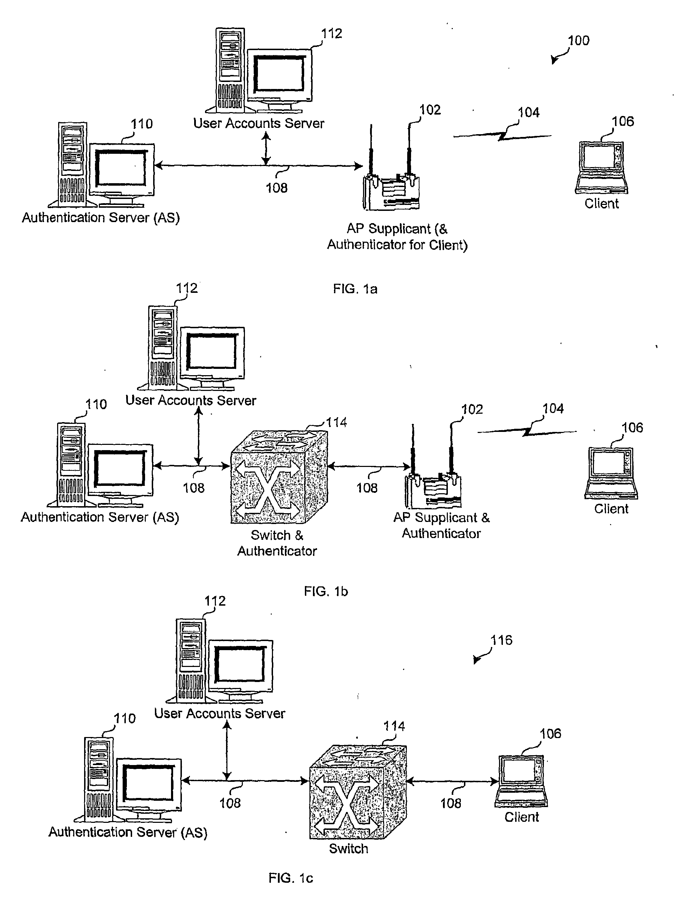

Referring now to FIG. 1a, there is illustrated a general block diagram of a system that utilizes the described LEAP protocol, in accordance with a disclosed embodiment. A basic system 100 for describing the novel LEAP protocol includes a wireless access point (AP) 102 for communicating over a wireless communication link 104 to a wireless client 106. The AP 102 provides wired network access for the wireless client 106 to a LAN 108 to a centralized authentication server (AS) 110 disposed on the LAN 108 for providing such services. The AS 110 can be configured to run a RADIUS (Remote Authentication Dial-In User Service) protocol for Authentication, Authorization, and Accounting (AAA) services. Note that other types of authentication servers such as DIAMETER can be used. Authentication is a process that determines who is accessing a resource, and almost always comes first. Authorization determines what an authenticated user may do (e.g., assign an IP address), and accounting is logging the actions taken or resources used by the user. The AS 110 provides AAA services to any network entity that can function as an authenticator, for example, the AP 102.

The system 100 also includes a conventional network server 112 having a user accounts database for providing an associated hashed user password to the AS 110 once the username becomes available on the system 100.

In an optional implementation shown in FIG. 1b, a switch 114 is included between the AP 102 and the AS 110 such that packet traffic from the client 106 and AP 102 is transmitted through the switch to the AS 110, and upon the client 106 becoming properly authenticated, to other network services provided by servers disposed on the network 108 (e.g., accounts server 112).

Wireless network environments are open to what is known as the "man-in-the-middle" attack. Thus to substantially reduce the possibility of such an attack, the LEAP algorithm provides for mutual authentication wherein the AS 110 issues a challenge to the client 106 to which a proper response "verifies" to the AS 110 that the client 106 is a trusted entity. In turn, the client 106 issues a corresponding challenge to the AS 110 to which a proper response "verifies" to the client 106 that the AS 110 is a trusted entity, and that the network is that to which the client 106 intended to connect.

IEEE 802.11 supports the use of up to four encryption keys for encrypting traffic between the client 106 and the AP 102. The AP 102 uses one of the key indices for the session key. The session key has a different value for each client/access point connection. Another key is used for the multicast/broadcast traffic sent by the AP 102, and is usually the same for all clients 110 of the AP 102. Eight bytes of random number are transmitted from the AS 110 to the client 106. The mathematical response of the AS 110 to the challenge of the client 106 is not quite the same as the mathematical response of the client 106 to the challenge of the AS 110. However, the mathematical responses of the client 106 and AS 110 are derived from the same user password. Thus both the client 106 and the AS 110 are capable of deriving the anticipated responses of the other during the mutual challenge-response process in order to authenticate one another.

In this particular embodiment, the challenge-response exercise between the AS 110 and the client 106 is based upon a Challenge-Handshake Authentication Protocol (CHAP). There are many different types of CHAP that can be utilized, and the response from the client 106 is, of course, dependent on the CHAP-type utilized by the AS 110. Since most RADIUS servers support MS-CHAP (Microsoft CHAP), this scheme was chosen to be compatible with MS-CHAP RADIUS server databases. MS-CHAP is a Point-to-Point Protocol (PPP) that provides a standard method for transporting multi-protocol datagrams over PPP links. PPP defines an extensible Link Control Protocol and a family of Network Control Protocols for establishing and configuring different network layer protocols. Microsoft's PPP CHAP dialect (i.e., MS-CHAP) extends the user authentication functionality provided on Microsoft Windows^{™} networks to remote workstations. Microsoft created MS-CHAP to authenticate remote Windows^{™} workstations, providing the functionality to which LAN-based users are accustomed while integrating the encryption and hashing algorithms used on Windows networks.

The disclosed protocol utilized according to the system 100 consists of a network access server (NAS) authenticator device (i.e., the AP 102 performing an authenticator function for authentication of the client 106) sending a random challenge (on behalf of the AS 110) to the client 106. The client 106 contains a DES (Data Encryption Standard) algorithm that encrypts the challenge to format a response using, in this particular embodiment, an MD4 hash of the user password of the client user attempting to log in and access services on the LAN 108. The client response is then transmitted to the AP 102. The AP 102 forwards the response to the AS 110 for interrogation and authentication. The AS 110 verifies the response using knowledge of the username and password. The username is received from the client 106 during a prerequisite login process for gaining access to the network 108. The AS 110 receives the username, and passes it to the user accounts server 112. The accounts server 112 performs a compare on the accounts database with the username to arrive at the corresponding encoded user password, and transmits the encoded password back to the AS 110 in the form of a single hash of the Unicode format of the user password. Thus the AS 110 never receives the actual user password across the network 108 from the client 106, but receives a hashed version of it from the accounts database of the user accounts server 112. (A hash function H is defined as a transformation that takes an input *m* and returns a fixed-size string, which is called the hash value *h*, that is, *h* = H(*m*). R. L. Rivest developed the MD4 encryption standard, which is a Damgård/Merkle iterative structure defined in terms of a compression function.)

All communications from the AP 102 to the AS 110 are not encrypted. However, communication over the wireless link 104 between the client 106 and the AP 102 is according to the IEEE 802.11 and 802.1x architecture standards, and can, optionally, be encrypted.

When the wireless client 106 seeks access to the wired LAN 108, the disclosed protocol is utilized to mutually authenticate the client 106 and the network (via the AS 110) whereupon after completion of a successful authentication process, the AP 102 allows "unaltered and unimpeded" packet traffic from the client 106 directly to services of the network 108. (Note that the phrase "unaltered and unimpeded" means that the restructuring of message packets received by the AP 102 from the client 106 normally occurring during the authentication process of the client 106 is no longer required.) During the authentication process, the AP 102 acts as a transparent relay of the conversation between the client 106 and the AS 110.

EAPOL (Extensible Authentication Protocol over LAN) packets from the client 106 have an EAPOL header that is removed and contents added, as an EAP attribute, to a RADIUS Request packet to the AS 110. RADIUS packets from the AS 110 have the EAP attribute contents added to an EAPOL packet and sent to the client 106. The AP 102 never needs to interrogate the contents of the EAP authentication.

To authenticate the client 106, all wireless packet traffic between the client 106 and the AP 102 is structured with LEAP information encapsulated within EAP information, both further encapsulated with IEEE 802.1x or RADIUS. The wireless traffic can further be encapsulated with IEEE 802.11 information. The encapsulated client information is then transmitted over the wireless link 104 to the AP 102 where the client information is then reconstructed for the wired protocol of the network 108. Thus the client information is extracted and re-encapsulated with LEAP, EAP, RADIUS, UDP, and IP in an IEEE 802.3 format. Of course, packet traffic from the AP 102 to the client 106 is then suitably restructured from IEEE 802.3 to IEEE 802.11 traffic utilizing the wireless protocols IEEE 802.11 and 802.1x.

If successfully authenticated, the AS 110 notifies the AP 102 of the successful authentication of the client 106. All future traffic from the client 106 during normal operation of the system 100 then passes through the AP 102 unimpeded and unaltered. Alternatively, if authentication fails, the client 110 is denied access to the services of the network 108. (Note that although the network 108 has been discussed in the context of a LAN, the network may also be a WAN, Intranet, Extranet, etc., communication over which facilitates the challenge-response handshake of the system 100 entities.)

Referring now to FIG. 1b, there is illustrated a general block diagram of an alternative embodiment system utilizing a switch 114 and wireless client 106 according to the described LEAP protocol. The switch 114, running the LEAP protocol, is disposed on the network 108 between the AP 102 and the AS 110 to switch packet traffic therebetween. During authentication of the AP 102 (the AP 102 now as a supplicant), the switch 114 functions as authenticator on behalf of the AP 102 to the AS 110. Once the AP 102 becomes authenticated, the switch 114 accepts all future traffic from the AP 102. Similarly, when the client 106 associates to the AP 102, the AP 102 performs an authenticator function on behalf of the client 106 for authentication of the client 106 to the AS 110.

Referring now to FIG. 1c, there is illustrated a general block diagram of an alternative embodiment wired system 116 that utilizes the described protocol. The wired system 116 includes the AS 110, accounts server 112, and switch 114 disposed on the network 108. In this particular embodiment, the AP 102 of FIG. 1b is eliminated. The switch 114 is configured to run the LEAP protocol. Since the wired client 106 utilizes a wired connection, no encryption is available between the client 106 and the switch 114.

The client 106 can be easily converted to operate either wirelessly according to FIGURES 1a and 1b, or in the wired environment of FIG. 1c by making the appropriate hardware implementations. The computer 116 must first be authenticated to the AS 110 through the switch 114. When authenticated, the computer 116 acts as a proxy for the authentication process of the wired client 106. As indicated hereinabove, mutual authentication occurs between the client 106 and the AS 110 through the computer 116 and switch 114. The mutual authentication process is described in greater detail hereinbelow.

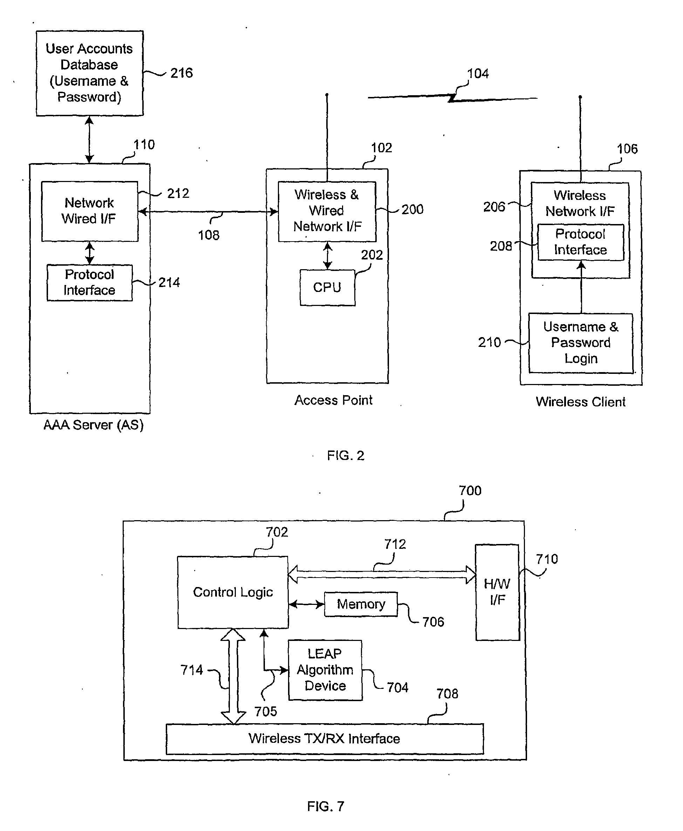

Referring now to FIG. 2, there is illustrated a block diagram of general network entities and associated protocol interfaces of FIG. 1a. The wired network 108 has disposed thereon the AS 110 and the AP 102. The wireless client 106 communicates with the AP 102 via the communication link 104. Internal to the AP 102 is an AP network interface 200 operatively disposed to provide wireless communication via the link 104 with one or more wireless clients 106 and wired communication via the wired network 108 to network entities, including the AS 110. The wired network 108 is suitably configured for Ethernet and Token Ring architectures, although not limited to such architectures to operate the disclosed LEAP protocol. The AP 102 also contains a central processing unit (CPU) 202 for controlling all functions of the unit.

The client 106 comprises a client wireless network interface 206 for facilitating wireless communication with the AP interface 200 via the AP network interface 200. The client network interface 206 is illustrated including the LEAP protocol algorithm contained within a client protocol interface 208 although it need not be, but can be incorporated into the client 106 in the variety of methods. For example, the client protocol interface 208 can be any conventional non-volatile firmware (e.g., EEPROM, flash memory, etc.) suitable for providing the access speed required by a system CPU (not shown) of the client 106. Alternatively, the protocol algorithm can be designed into the client CPU such that the illustrated separate protocol interface 208 is not required. Further still, the protocol algorithm can be encoded into a controller (not shown) of the client interface 206 that is easily removable such that the client interface 206 can be replaced or upgraded when desired.

The client 106 also comprises a username and password interface 210 such that a user of the client 106 can enter user login information when prompted to do so for authentication purposes. The username and password used for processing of the authentication steps in accordance with the novel protocol can also be the same username and password that the user of the client would utilize in logging-in to a Microsoft network.

The AS 110 includes an AS network interface 212 for communicating over the wired network 108 to the AP 102, during the authentication process which is described in greater detail hereinbelow, and eventually to the client 106. The AS 110 executes the disclosed protocol from an AS 110 protocol interface 214. The AS 110 interfaces to one or more database modules 216 of the remote user account server 112 that contain user names and associated user passwords and hashes thereof. Although the description associates the AS 110 being a RADIUS-type server, the protocol interface 214 is suitably compatible with many non-RADIUS-type servers. Note that the database module 216 can reside locally on the AS 110 or remotely on another server disposed on the network 108.

The client 106, as illustrated in FIG. 1a, is a portable computer that can roam from cell to cell for use in accessing the wired network 108 via one or more AP units 102. However, the wireless client 106 can also be a printer, fax, copier, desktop computer, or other device that is operable to communicate wirelessly under constraints of the disclosed protocol algorithm.

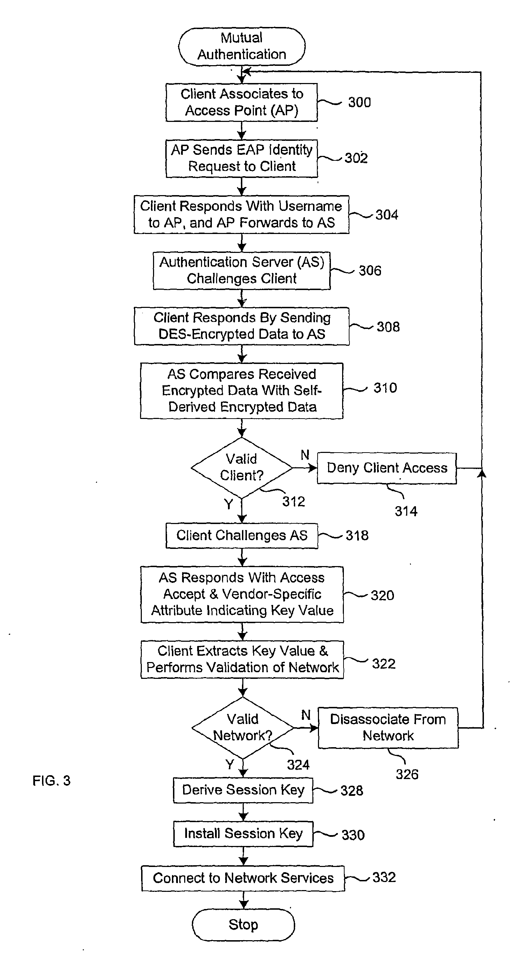

Referring now to FIG. 3, there is illustrated a general flow chart of the protocol process for mutual authentication between the wireless client 106 and AS 110 of FIG. 1a. Flow begins at a Start terminal and moves to a function block 300 where the client 106 associates to the AP 102. The AP 102 then sends an EAP identity request to the client 106, as indicated in a function block 302. Flow is to a function block 304 where the username and password of the client user are obtained (e.g., via a login process) in the client 106. The username is transmitted from the client 106 to the AP 102, and forwarded from the AP 102 to the AS 110. The AS 110 then issues a challenge to the client 106, as indicated in a function block 306. In a function block 308, the client 106 responds by performing a DES encryption step, and sending the DES encrypted data to the AS 110. The AS 110 does the same DES encryption based on information corresponding to the received username and checks it against the encrypted response data received from the client 106. Flow is then to a decision block 312 where if the client 106 is not a valid client, flow is out the "N" path to a function block 314 to deny network access to the client 106. Flow then loops back to the input of function block 300 to reinitiate the association process. If the AS 110 determines that the client is valid, flow is out the "Y" path of decision block 312 where the AS 110 notifies the AP 102 that the client is valid, which AP 102 forwards the validation information to the client 106.

In accordance with the mutual authentication aspects of the disclosed LEAP algorithm, the client 106 then initiates a challenge to the AS 110, as indicated in a function block 318. Flow is to a function block 320 where the AS 110 responds with an access-accept, and vendor-specific attribute indicating a key value. This response is forwarded to the client 106 who then performs validation of the network, as indicated in a function block 322. Flow is to a decision block 324, where if the client 106 does not validate the network, flow is out the "N" path to a function block 326 where the client 106 disassociates with the network. Flow then loops back to the input of function block 300 where the client 106 can then be forced to reinitiate the association process.

If the client 106 determines the network to be that which it wants to connect, flow is out the "Y" path of decision block 324 to a function block 328 where a session key is derived. The client installs the session key, as indicated in a function block 330. In a function block 332, the client 106 and the AS 110 have been mutually authenticated, such that the client now gains access to network services disposed on the network 108. The process then reaches a Stop terminal.

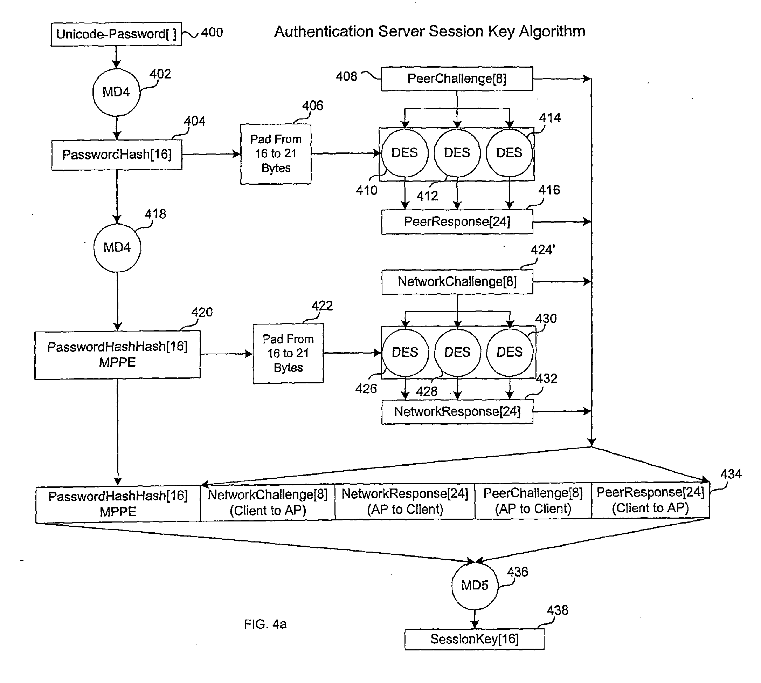

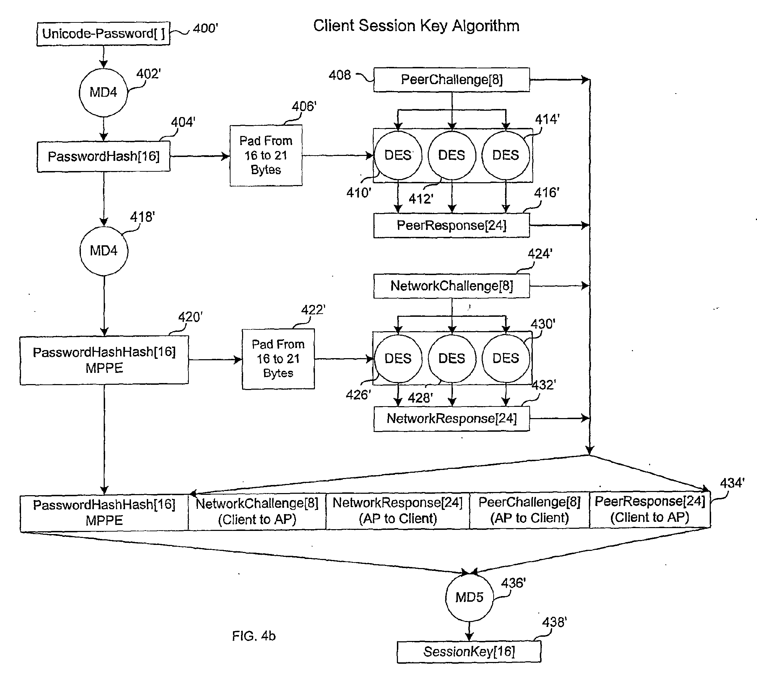

Referring now to FIGURES 4a and 4b, each illustrate a flow diagram of the LEAP encryption process for deriving a respective session key in the AS 110 and the client 106, in accordance with a disclosed embodiment. The session key algorithm of FIG. 4a is utilized in the AS 110, and the identical algorithm of FIG. 4b is utilized in the client 106 (the client algorithm numbering denoted with a " ' " prime symbol in FIGURES 4a and 4b, and in the text with an apostrophe " ' ").

Continuing now with the algorithm of the AS 110 of FIG. 4a, the key derivation process begins with a Unicode user password 400 (illustrated as Unicode-Password[]). As mentioned hereinabove, the username of the client user is transmitted from the client 106 to the AS 110, and used to find the associated user password in the user accounts database of the user accounts server 112. The user accounts server 112 retrieves the corresponding user Unicode password MD4 hash 404. Note that other suitable hash algorithms can be used, for example, MD5. The output of the MD4 hash algorithm block 402 is a 16-byte single-hash password 404 (illustrated as PasswordHash[16]). This single-hash password 404 is transmitted to the AS 110 from the accounts server 112 and utilized as an input to the session key algorithm.

The peer challenge/response portion of the AS key derivation algorithm is utilized in the first half of the mutual authentication process between the AS 110 and the client 106. As part of the network authentication process, the AS 110 generates and sends a peer-challenge word 408 to the client 106. The peer challenge/response portion then splits the single-hash password 404 into multiple subwords (three, in this particular embodiment) of seven bytes each, and uses the subwords as encryption keys in a subsequent encryption process. The three 7-byte keys and a plaintext peer-challenge password 408 (illustrated as PeerChallenge[8]) are used as inputs to a peer DES encryption process to generate an "expected" peer-response word 416. (The significance of the term "expected" is discussed in greater detail hereinbelow.) Since the single-hash password 404 is currently sixteen bytes in length, splitting the single-hash password 404 into three subwords leaves the third subword short of bits to be a 7-byte word. Thus a first padding block 406 pads the third subword of the single-hash password 404 with zeroes to bring the total bytes of the three subword encryption keys to twenty-one bytes.

The 8-byte peer-challenge word 408 sent from the AS 110 via the AP 102 to the client 106 is then encrypted three times utilizing three peer DES encryption processes 410, 412, and 414. That is, the peer-challenge 408 is DES encrypted via the first DES block 410 with the first 56-bit subword of the single-hash password 404, DES encrypted via the second DES block 412 with the second 56-bit subword of single-hash password 404, and the remaining bits of single-hash password 404 are padded with zeroes to create the third 56-bit subword DES key used for encrypting the peer-challenge 408 via the third DES block 414. The resulting outputs of the corresponding DES operations (410, 412, and 414) are then concatenated together to form the 24-byte "expected" peer-response word 416 (illustrated as PeerResponse[24]). The peer-response word 416 is "expected" in that it is calculated in the AS 110 before the actual encrypted peer response word 416' (in FIG. 4b, denoted as 416' to indicate generated by the client 106) is received from the client 106. The peer-response word 416' received from the client 106 must be identical to the expected encrypted peer-response word 416 derived by the AS 110. Thus when the client 106 replies with its generated peer-response word 416', the AS 110 compares the expected encrypted peer-response word 416 with the received encrypted peer-response 416' of the client 106 as a validation step for authenticating the client 106. If the comparison fails, the client 106 is prohibited from gaining access to the network.

The network challenge/response portion of the key derivation algorithm of the AS 110 is utilized in the second half of the mutual authentication process between the AS 110 and the client 106. The network challenge/response portion also uses the 16-byte single-hash password 404, but first passes the single-hash password 404 through a second MD4 digest algorithm 418. The resulting output is a 16-byte double-hash password 420 (illustrated as PasswordHashHash[16]). The network challenge/response portion splits the double-hash password 420 into multiple subwords (three, in this particular embodiment) of eight bytes each, and uses the subwords as encryption keys in a subsequent encryption process. The three 7-byte keys and a plaintext network-challenge password 424' (illustrated as PeerChallenge[8]) are used as inputs to a network DES encryption process to generate an network-response word 432. (Note that the network-challenge password 424 is denoted with an apostrophe symbol " ' " in text, and prime symbol " ' " in the illustration, to indicate that it is received from the client 106.) Since the double-hash password 420 is currently sixteen bytes in length, splitting the double-hash password 420 into three subwords leaves the third subword short of bits to be a 7-byte word. Thus a second padding block 422 pads the third subword of the double-hash password 420 with zeroes to bring the total bytes of the three subword encryption keys to twenty-one bytes.

The 8-byte network-challenge word 424' received from the client 106 is then encrypted three times utilizing three network DES encryption processes 426, 428, and 430. That is, the network-challenge 424' is DES encrypted via the fourth DES block 426 with the first 56-bit subword of the double-hash password 420, DES encrypted via the fifth DES block 428 with the second 56-bit subword of the double-hash password 420, and the remaining bits of double-hash password 420 are padded with zeroes to create the third 56-bit subword DES key used for encrypting the network-challenge 424' via the sixth DES block 430. The resulting outputs of the corresponding DES operations (426, 428, and 430) are then concatenated together to form the 24-byte network-response word 432 (illustrated as NetworkResponse[24]). The network-response word 432 is transmitted to the client 106 for comparison in the client session key algorithm as a validation step for authenticating the AS 110. If the comparison fails, the client 106 deems the AS 110 part of a network to which it does not want to connect, and disassociates.

In the AS 110 session key algorithm, the peer challenge/response words (408 and 416), network challenge/response words (424' and 432), and double-hash password 420 are then used to create an 80-byte intermediate word 434. The intermediate word 434 is an ordered structure of the double-hash password 420 (also called an NT key, in this particular embodiment) concatenated with the LEAP network-challenge word 424' received from the client 106, the LEAP network-response word 432 calculated by the AS 110, the LEAP peer-challenge word 408 from the AS 110, and the peer-response word 416 calculated by the AS 110. The intermediate word 434 is then passed through an MD5 digest algorithm 436 to arrive at a 16-byte AS session key 438 (illustrated as SessionKey[16]).

Note that the AS session key 438 derived by the AS 110 is forwarded to the AP 102 using a shared secret such that the session key 438 is not compromised during transmission over the wired network 108 to the AP 102.

Referring again now to FIG. 4b, the session key algorithm in the client 106 performs the same operations performed in the session key algorithm of the AS 110. However, the derived intermediate word 434' of the client 106 is constructed slightly differently. The client intermediate word 434' is the ordered concatenation of the client double-hash password 420', the network-challenge 424' sent from the client 106 to the AS 110, the self-derived network-response 432' of the client 106, the peer-challenge 408 received from the AS 110, and the self-derived peer-response 416'.

More particularly, the user password entered by the client user is converted into a Unicode format 400', and subsequently, an MD4 digest process 402' is performed on the Unicode password 400'. Note that other suitable hash algorithms can be used, for example, MD5. The output of the MD4 hash algorithm block 402' is a 16-byte single-hash password 404' (illustrated as PasswordHash[16]).

The peer challenge/response portion of the client key derivation algorithm is utilized in the first half of the mutual authentication process between the AS 110 and the client 106. The peer challenge/response portion splits the single-hash password 404' into multiple subwords (three, in this particular embodiment) of eight bytes each, and uses the subwords as encryption keys in a subsequent encryption process. The three 7-byte keys and a plaintext peer-challenge password 408 (illustrated as PeerChallenge[8]) are used as inputs to a peer DES encryption process to generate a peer-response word 416'. (Note that the peer-challenge password 408 does not contain the prime symbol since it is received from the AS 110 as part of the opening step of the challenge process between the entities.) Since the single-hash password 404' is currently sixteen bytes in length, splitting the single-hash password 404 into three subwords leaves the third subword short of bits to be a 7-byte word. Thus a first padding block 406' pads the third subword of the single-hash password 404' with zeroes to bring the total bytes of the three subword encryption keys to twenty-one bytes.

The 8-byte peer-challenge word 408 sent from the AS 110 via the AP 102 to the client 106 is then encrypted three times utilizing three peer DES encryption processes 410', 412', and 414'. That is, the received peer-challenge 408 is DES encrypted via the first DES block 410' with the first 56-bit subword of the single-hash password 404', DES encrypted via the second DES block 412' with the second 56-bit subword of single-hash password 404', and the remaining bits of single-hash password 404' are padded with zeroes to create the third 56-bit subword DES key used for encrypting the peer-challenge 408 via the third DES block 414'. The resulting outputs of the corresponding DES operations (410', 412', and 414') are then concatenated together to form the 24-byte peer-response word 416' (illustrated as PeerResponse[24]). The peer-response word 416' transmitted from the client 106 to the AS 110 must be identical to the expected encrypted peer-response word 416 derived by the AS 110. Thus when the client 106 replies to the AS 110 with its generated peer-response word 416', the AS 110 compares the expected encrypted peer-response word 416 with the received encrypted peer-response 416' of the client 106 as a validation step for authenticating the client 106. If the comparison fails, the client 106 is prohibited from gaining access to the network.

The network challenge/response portion of the key derivation algorithm of the client is utilized in the second half of the mutual authentication process between the AS 110 and the client 106. As part of the network authentication process, the client 106 generates and sends a network-challenge word 424' to the AS 110. The network challenge/response portion also uses the 16-byte single-hash password 404', but first passes the single-hash password 404' through a second MD4 digest algorithm 418'. The resulting output is a 16-byte double-hash password 420' (illustrated as PasswordHashHash[16]). The network challenge/response portion splits the double-hash password 420' into multiple subwords (three, in this particular embodiment) of eight bytes each, and uses the subwords as encryption keys in a subsequent encryption process. The three 7-byte keys and a self-generated plaintext network-challenge password 424' (illustrated as PeerChallenge[8]) are used as inputs to a network DES encryption process to generate an "expected" network-response word 432'. Since the double-hash password 420' is currently sixteen bytes in length, splitting the double-hash password 420' into three subwords leaves the third subword short of bits to be a 7-byte word. Thus a second padding block 422' pads the third subword of the double-hash password 420' with zeroes to bring the total bytes of the three subword encryption keys to twenty-one bytes.

The 8-byte network-challenge word 424' is then encrypted three times utilizing three network DES encryption processes 426', 428', and 430'. That is, the network-challenge 424' is DES encrypted via the fourth DES block 426' with the first 56-bit subword of the double-hash password 420', DES encrypted via the fifth DES block 428' with the second 56-bit subword of the double-hash password 420', and the remaining bits of double-hash password 420' are padded with zeroes to create the third 56-bit subword DES key used for encrypting the network-challenge 424' via the sixth DES block 430'. The resulting outputs of the corresponding DES operations (426', 428', and 430') are then concatenated together to form the expected encrypted 24-byte network-response word 432' (illustrated as NetworkResponse[24]). The expected network-response word 432' is used by the client 106 for comparison with the actual network response 432 received from the AS 110 in the client session key algorithm as a validation step for authenticating the AS 110. If the comparison fails, the client 106 deems the AS 110 part of a network to which it does not want to connect, and disassociates.

In the client session key algorithm, the peer challenge/response words (408 and 416'), network challenge/response words (424' and 432'), and double-hash password 420' are then used to create an 80-byte intermediate word 434'. The intermediate word 434' is an ordered structure of the double-hash password 420' (also called an NT key, in this particular embodiment) concatenated with the LEAP network-challenge word 424' transmitted from the client 106, the LEAP expected network-response word 432' calculated by the client 106, the LEAP peer-challenge word 408 received from the AS 110, and the peer-response word 416' calculated by the client 106. The intermediate word 434' is then passed through an MD5 digest algorithm 436' to arrive at a 16-byte client session key 438' (illustrated as SessionKey[16]).

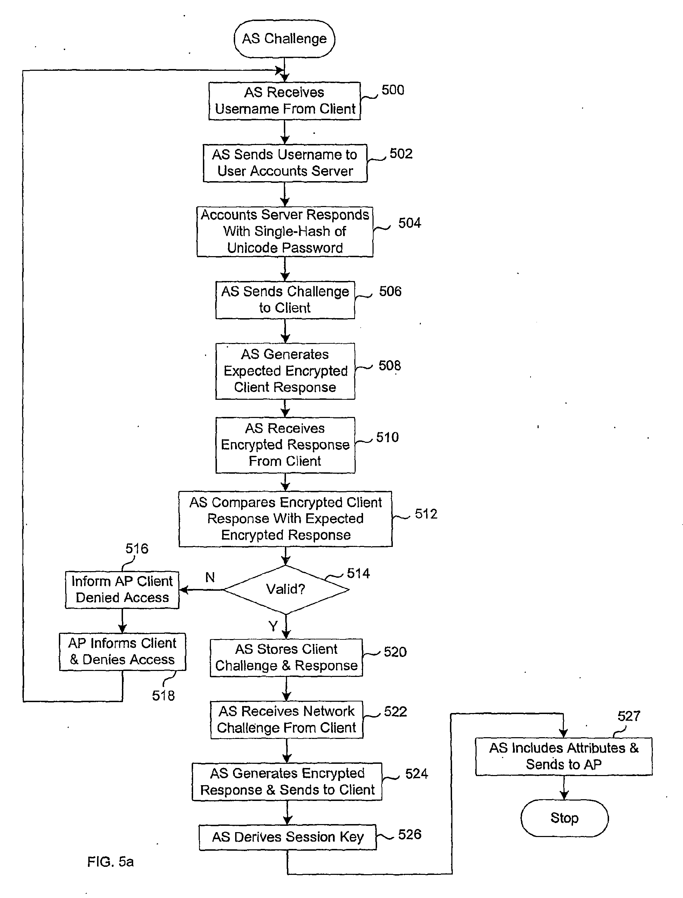

Referring now to FIG. 5a, there is illustrated a detailed flow chart of the challenge/response process from the perspective of the AS 110, according to a disclosed embodiment. As described hereinabove, the AS session key 438 is derived from the double-hash password 420 of the user Unicode password 400, the contents of the peer challenge/response (408 and 416) from the AS 110 to the client 106, and the network challenge/response (424' and 432) from the client 106 to the AS 110. IEEE 802.11 encryption may be based on 40-bit WEP keys. Most vendors also implement a 128-bit (really a 104-bit) key. The client and AS key derivation algorithms provide session keys longer than what are needed.

The AS session key 438 and the client session key 438' are not exchanged between the AS 110 and the client 106, since each entity derives its own respective session key. Instead, when the AP 102 receives the AS session key 438 from the AS 110 using the shared secret, the AP 102 sends an EAPOL-KEY message to the client 106 supplying the key length and key index of the AS session key 438 to use in comparison with the client session key 438'. The AS session key 438 is not sent, since the client 106 derives the client session key 438' on its own. The AS EAPOL-KEY message packet is encrypted using the full-length derived AS session key 438. The AP 102 also sends an EAPOL-KEY message supplying the length, key index and value of a multicast key. This EAPOL-KEY message packet is also encrypted using the full-length derived AS session key 438.

The EAP module of the AS 110 may not have access to the plaintext user password of the user accounts server 112 since some back-end databases are unwilling to give up this information. Arguably, the most widely used database 216 is the Microsoft Windows NT™ networking database. The best that can be obtained from this database 216 is a value called the NT key, which is the MD4 hash of the first sixteen bytes of the user Unicode password. Unicode is a universal character standard that uses a double-byte character set containing more than 38,000 characters.

Continuing with the flow chart of FIG. 5a, flow begins at a Start terminal and moves to a function block 500 where the AS 110 receives the username of the client user that was transmitted from the client 106 after the user performs a login. Flow is to a function block 502 where the AS 110 then sends the received username to the user accounts server 112. In a function block 504, the accounts server 112 performs a search of the user accounts database 216 to find the associated user password, and as mentioned hereinabove, returns a password that is not the plaintext user password, but a single-hash password 404 that is generated by an MD4 digest 402 of the Unicode version of the password 400. The protocol interface 214 of the AS 110 uses the single-hash password 404 as the basis for generating the AS session key 438.

In a function block 506, the first interactive step of mutual authentication begins by the AS 110 generating and sending a peer-challenge 408 to the client 106, via the AP 102. In the interim, while the AS 110 waits for the client 106 to respond (or at any appropriate time that does not impede the authentication process) to the peer-challenge 408, the protocol interface 214 of the AS 110 generates an expected encrypted peer-response 416, as indicated in a function block 508. As described hereinabove, the expected peer-response 416 is derived by first segmenting the single-hash password 404 into three subwords. Since there are an insufficient number of bits to arrive at three subwords of equal size, the third subword is padded with zeroes in the first padding process 406. These three subwords are used as keys in three separate DES encryption operations (410, 412, and 414) performed on the peer-challenge word 408 to arrive at the expected encrypted peer-response 416.

Flow is to a function block 510 where the AS 110 receives the encrypted peer-response 416' from the client 106. The AS 110 then performs a comparison of the received encrypted peer-response 416' with the self-derived expected encrypted peer-response 416. Flow is to a decision block 514 to determine if the comparison resulted in a valid or authenticated client 106. If not, flow is out the "N" path to a function block 516 where the AS 110 informs the AP 102 of the failed authentication. In a function block 518 the AP 102 informs the client 106 of the failed authentication. At this point, the AS 110 can request the client 106 perform the login operation again, as indicated by flow from function block 518 to the input of function block 500. Alternatively, the AP 102 can simply block any further transmissions from the client 106.

If the client 106 is successfully authenticated, flow is out the "Y" path of decision block 514 to a function block 520 where the AS 110 stores the peer-challenge 408 and self-derived peer-response 416 for later use in generating the AS session key 438. In a function block 522 the AS 110 receives the network-challenge 424' from the client 106. In order to develop the network-response 432 for transmission back to the client 106, in a function block 524, the AS 110 first must generate the double-hash password 420 using a second MD4 digest 418 of the single-hash password 404. Note that the type of digest is not restricted to MD4, but could also be MD5, or other digests, insofar as the digest facilitates rapid execution by the associated processor such that packet blocking of the client 106 is not prohibitive of making the network connection. The second padding operation 422 performs the same type of padding as was performed in the first padding process 406, only on the double-hash password 420. The double-hash password 420 is segmented into three subwords with the third subword requiring zero padding to bring it to the same number of bits as the other two subwords. The three subwords are then used as keys to the three separate network DES operations (426, 428, and 430) on the received network-challenge 424' to arrive at the encrypted network-response 432. The AS 110 sends the derived network-challenge 432 to the client 106.

In a function block 526, the AS 110 now has all the pieces necessary to derive the AS session key 438, and send it to the AP 102 using the shared secret. The intermediate word 434 is formed by the ordered concatenation of the double-hash password 420, followed by the network-challenge 424', followed by the network-response 432, followed by the peer-challenge 408, followed by the self-derived peer-response 416. The intermediate word 434 is then digested using the MD5 hash 436 to arrive at the AS session key 438.

The AS 110 then includes vendor-specific attributes in the session key packet that indicate to the client 106 the encryption key value, and sends the packet to the AP 102, as indicated in a function block 527. When received, the AP 102 extracts the key value and sends an encrypted EAPOL-KEY message to the client 106 that indicates to the client 106 the key length and key index (one of four available) of the AS session key 438. The AP 102 then sends an additional encrypted EAPOL-KEY message to the client 106 indicating the key length, key index, and value of the multicast key. Note that both encrypted EAPOL-KEY messages are encrypted using the full AS session key 438.

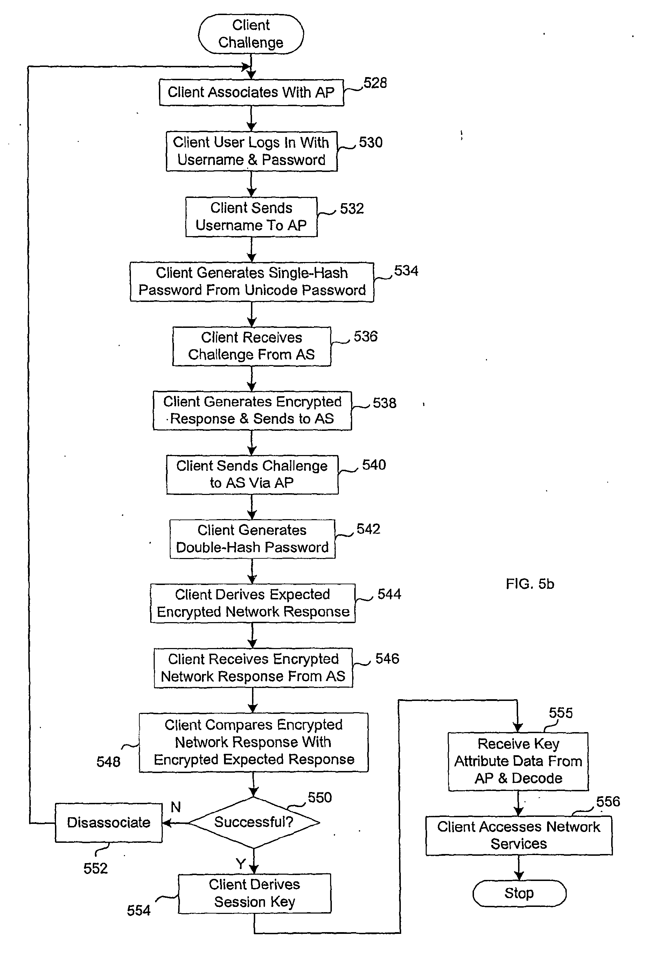

Referring now to FIG. 5b, there is illustrated a detailed flow chart of the challenge/response process from the perspective of the client 106, according to a disclosed embodiment. The client 106 performs the similar operations on its password, i.e., hashing, padding, and encrypting. Flow begins at a function block 528 where the client 106 associates with the AP 102. The client user then performs a login function that provides his or her username and password, as indicated in a function block 530. In a function block 532, the username is then transmitted from the client 106 to the AS 110, via the AP 102.

In preparation for deriving the expected encrypted network-response 432, the client protocol interface 208 of the client 106 then performs an MD4 digest 402' of its Unicode password 400' to arrive at the single-hash password 404', as indicated in a function block 534.

In a function block 536, the client 106 receives the peer-challenge 408 from the AS 110. The client 106 must now generate the encrypted peer-response 416'. To do so, the client protocol interface 208 segments the single-hash password 404' into three subwords. The third subword requires more bits to which the first padding process 406' pads zeroes to the third subword to bring it to the same number of bits as each of the other two 7-byte subwords. The padding operation 406' brings the single-hash password 404' to a 24-byte word. The three 7-byte subwords are used as respective keys in the peer DES encryption operations (410', 412', and 414') on the peer-challenge 408 to arrive at the encrypted peer-response 416'. As in the AS 110 protocol interface 214, the client protocol interface 208 includes each of the three DES functions (410', 412', and 414') that operate on the respective 7-byte segments of the padded password. That is to say, the first DES 410' calculation operates on the first 7-byte segment of the padded single-hash password 404' as a first input and the 8-byte received peer-challenge 408 as the second input, the second DES 412' calculation operates on second 7-byte segment of the padded single-hash password 404' as a first input and the 8-byte received peer-challenge 408 as the second input, and the third DES 414' operates on a third 7-byte segment of the padded single-hash password 404' as a first input and the 8-byte received peer-challenge 408 as the second input. Thus the client 106 generates the encrypted peer-response 416', and sends it to the AS 110, as indicated in a function block 538. The client 106 also stores a copy locally for future use in generating its client session key 438'.

In a function block 540, the client 106 sends a network-challenge 424' to the AS 110 via the AP 102. In the interim, or at some point that does not impede the operation, the client 106 generates the double-hash password 420' in preparation for checking the expected encrypted network-response 432' of the AS 110, as indicated in a function block 542. As before with the single-hash password 404', the double-hash password 420' is segmented into three 7-byte subwords, the last of which needs to be zero padded in the second padding process 422' to bring the number of bits equal to each of the other two subwords. Each of the three 7-byte subwords is used as a key in respective network DES encryption processes (426', 428', and 430') on the network-challenge 424' to derive the expected encrypted network-response 432', as indicated in a function block 544. That is to say, the fourth DES 426' calculation operates on the first 7-byte segment of the padded double-hash password 420' as a first input and the 8-byte self-generated network-challenge 424' as the second input, the fifth DES 428' calculation operates on a second 7-byte segment of the padded double-hash password 420' as a first input and the 8-byte self-generated network-challenge 424' as the second input, and the sixth DES 430' operates on a third 7-byte segment of the padded double-hash password 420' as a first input and the 8-byte self-generated network-challenge 430' as the second input.

In a function block 546, the client 106 then receives the encrypted network-response 432 from the AS 110. The client 106 then compares the encrypted network-response 432 with the self-derived expected encrypted network response 432', as indicated in a function block 548. Flow is to a decision block 550 to determine of the comparison was successful. If not, flow is out the "N" path to a function block 552 where the client 106 has determined that the network is that which it does not want to connect, and disassociates therefrom. At this point, flow loops back to the input of function block 528 for the next association to an AP 102.

If the comparison was successful, flow is out the "Y" path of decision block 550 to a function block 554 where the client 106 derives the client session key 438'. Session key derivation in the client protocol interface 208 is accomplished similar to the derivation process performed by the protocol interface 214 of the AS 110. The client 106 now has all the pieces necessary to derive the client session key 438'. The intermediate word 434' is formed by the ordered concatenation of the double-hash password 420' followed by the network-challenge 424', followed by the self-derived expected network-response 432', followed by the peer-challenge 408 received from the AS 110, and followed by the peer-response 416'.

The intermediate word 434' is then digested using the MD5 hash 436' to arrive at the client session key 438'. The client 106 receives the key attribute data, key length and index information from the AP 102, as indicated in a function block 555, and decodes it. After successfully comparing the key length and index information, flow is to a function block 556 where the client 106 has now determined that the network is that which it wants to connect, installs the client session key 438', and accesses the network services disposed thereon. Flow then reaches a Stop terminal.

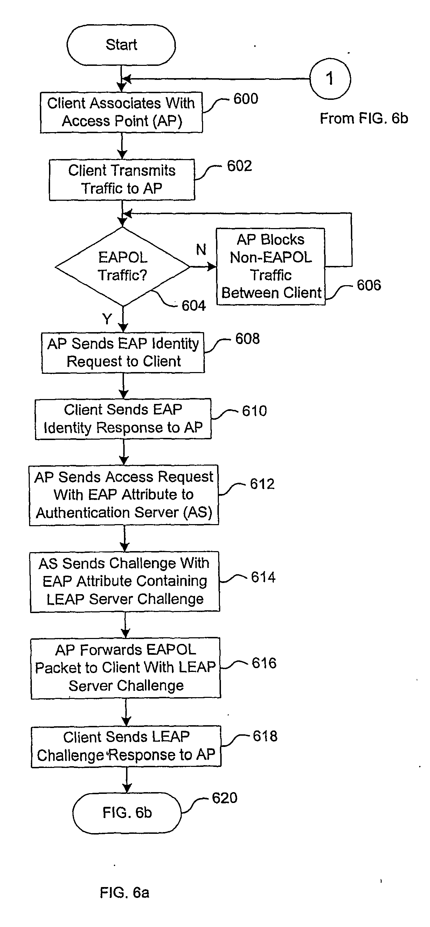

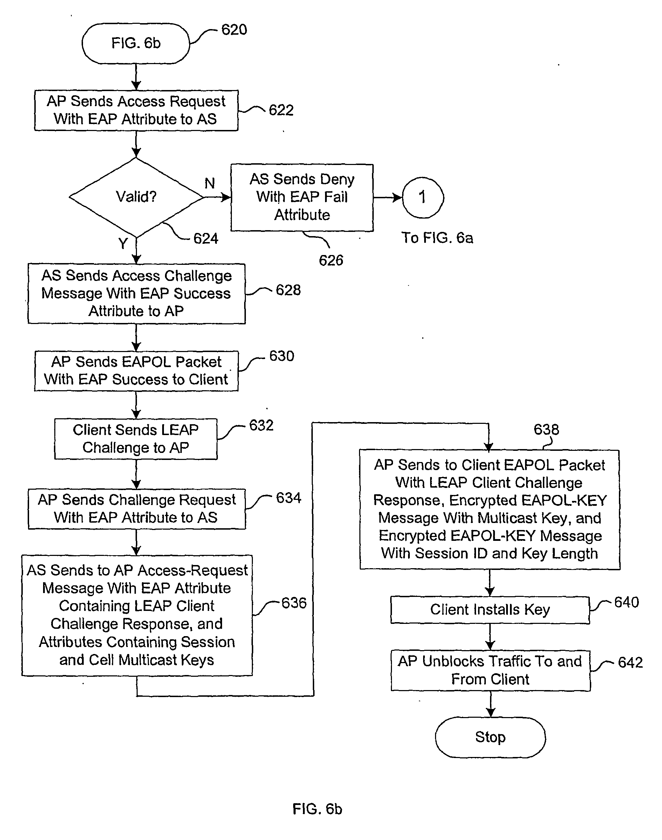

Referring now to FIGURES 6a and 6b, there is illustrated a flow chart describing protocol packet exchange between the AS 110 and client 106, in accordance with a disclosed protocol embodiment. The flow chart follows a scenario where mutual authentication between the AS 110 and the client 106 is successful. The disclosed novel mutual authentication process includes the client 106 first becoming validly authenticated to the AS 110, and then the client 106 challenging the AS 110 to be sure that the network 108 is that to which it should be connected. Note that the AP 102 is a wireless type of NAS, and that a wired NAS such as the switch 114 can be utilized according to FIG. 1c.

Flow begins at a function block 600 where the client 106 "associates" to the AP 102. As a prelude to associating, open and shared-key IEEE 802.11 authentication must first be successfully established. IEEE 802.1x association then commences by the client 106 sending a request packet to the AP 102. The AP 102 responds by sending a response packet to the client 106. The client 106 sends transmissions to the AP 102, as indicated in a function block 602. The AP 102 then determines if received packet traffic is EAPOL traffic, i.e., traffic suitable for seeking access to the wired LAN 108, as indicated in a decision block 604. If the received packet traffic is non-EAPOL traffic, flow is out the "N" path to a function block 606 where the AP 102 blocks any traffic between the client 106 and AP 102. Flow then loops back to the input of decision block 604 to continue monitoring transmissions.

If traffic received from the client 106 is EAPOL traffic, for example, an EAPOL Start message, flow is out the "Y" path of decision block 604 to a function block 608 where the AP 102 begins to perform an authenticator function by transmitting an EAPOL packet with EAP Identity Request message to the client 106. The client 106 responds with an EAP Identity Response message, as indicated in a function block 610. The AP 102 receives the EAP Identity Response packets from the client 106 and restructures the received client packets into an EAPOL format (i.e., RADIUS Access Request with EAP attributes) for forwarding to the AS 110. Flow is to a function block 612 where the AP 102 forwards the client Identity Response packets to the AS 110.

The AS 110 responds to the AP 102 with a Challenge Request message with EAP attribute containing a LEAP server challenge, as indicated in a function block 614. Flow is to a function block 616 where the AP 102 receives and forwards the Challenge Request packets to the client 106. The client 106 responds by sending a LEAP Challenge Response to the AP 102, as indicated in a function block 618. Flow continues to a terminal 620 that links the flow chart of FIG. 6a to the flow chart of FIG. 6b.

Continuing with FIG. 6b from the terminal 620, flow is to a function block 622 where the AP 102 sends the client Access Request to the AS 110 with an EAP attribute. Flow is then to a decision block 624 to determine if the client Access Request is a valid request. If not, flow is out the "N" path to a function block 626 where the AS 110 sends to the AP 102 a deny message having an EAP fail attribute. Flow then loops back to the input of function block 600 (of FIG. 6a) to reinitiate the association process.

If the client Access Request is valid, flow is out the "Y" path of decision block 624 to a function block 628 where the AS 110 sends an EAPOL Access Challenge message with EAP success attribute to the AP 102. The AP 102 then forwards the EAPOL packets with EAP success attribute to the client 106, as indicated in a function block 630, indicating that the client 106 has been successfully authenticated.

The client 106 now commences the second half of the mutual authentication process by sending a challenge to the network to be sure that the network is that to which it wants to connect. Since the client 106 is now a trusted client, client packet traffic proceeds unaltered and unimpeded through the AP 102 to the AS 110. (As mentioned hereinabove, mutual authentication is incorporated to substantially reduce the possibility of the man-in-the-middle attack scenario.) The client 106 sends a LEAP Challenge Request to the AS 110 via the AP 102, as indicated in a function block 632. The AP 102 forwards the Challenge Request with EAP attribute to the AS 110, as indicated in a function block 634.

Flow is then to a function block 636 where the AS 110 responds to the client Challenge Request by sending to the AP 102 a RADIUS Access-Accept packet containing an EAP attribute with the LEAP Challenge Response. The packets also contain vendor-specific attributes containing the session and cell multicast keys that inform the AP 102 of the value of the encryption key. Flow is to a function block 638 where the AP 102 forwards the EAPOL packet with LEAP client Challenge Response to the client 106. The AP 102 also sends to the client 106 the EAPOL-KEY with multicast key, and EAPOL-KEY with session ID and key length. The client 106 then verifies the Challenge Response, and if invalid, disassociates. If the AS 110 Challenge Response is valid, flow is to a function block 640 where the client 106 installs the keys. The AP 102 then unblocks all traffic to and from the client 106, as indicated in a function block 642. The process then reaches a Stop terminal.

The following sample routine takes the plaintext Unicode password 400 as input, and outputs the double-hash password key 420.

```
 static void
 hashpwd( uint8 *pwd, size_t pwdlen, uint8 * hash )
 {
      MD4_CTX md4Context;
      uint8 unicodepwd[256 * 2];
      int i;

      memclr( hash, 21 );
      memclr( unicodepwd, sizeof(unicodepwd) );
      for ( i = 0; i < pwdlen; i++ ) {
           unicodepwd[i*2] = *pwd++;

     MD4Init(&md4Context);
     MD4Update(&md4Context, unicodepwd, pwdlen * 2 * 8);
     MD4Final(hash, &md4Context);

     MD4Init(&md4Context);
     MD4Update(&md4Context, hash, 16 * 8);
     MD4Final(hash, &md4Context);
 }
```

### PACKET FORMATS

The EAPOL packet headers used by LEAP currently follow the 802.1x specification. One aspect not defined in this specification is that in an EAPOL-KEY message, the full-length derived session key is used both to create the packet signature and to encrypt the key value of the multicast key.

The EAP packet headers are as defined in RFC 2284.

EAP is extensible in that EAP request/response types may be defined for new authentication algorithms. The data part of the EAP packet is passed transparently by the EAP protocol routines.

The LEAP uses request/response type 17, a number assigned by IANA (Internet Assigned Numbers Authority). The LEAP Challenge message 424 is an EAP request with the request type set to 17 (for LEAP). Contents of the data section of the packet are provided in the following Table 1.

**Table 1. LEAP Challenge Packet Data Section**

| **Size (bytes)** | **Description** | **Value** |
|---|---|---|
| 1 | Version | 1 |
| 1 | Not Used | 0 |
| 1 | Length of the challenge | 8 |
| 8 | 8 bytes of challenge data | Random |
| N | Usemame | From EAP Identity Response |

The LEAP Challenge-Response packet 432 is an EAP response with response type set to 17. Contents of the data section of this LEAP packet are provided in the following Table 2.

**Table 2. LEAP Challenge-Response Packet Data Section**

| **Size (bytes)** | **Description** | **Value** |
|---|---|---|
| 1 | Version | 1 |
| 1 | Not Used | 0 |
| 1 | Length of the challenge response | 24 |
| 24 | Challenge response | MS-CHAP hash of challenge and user password |
| N | Username | |

The only non-standard RADIUS attribute used by LEAP is the vendor-specific attribute used to send the session key from the RADIUS server 110 to the AP 102. The AS session key 438 is sent using the vendor-AV pair attribute. The RADIUS attribute is type 26 (for vendor-specific). The vendor ID is suitable for the specific vendor (e.g., ID = 9 for Cisco Technologies, Inc.) and the vendor type is 1 (for AV (Attribute-Vendor) pair). The attribute-specific data is provided in the following Table 3.

**Table 3. Attribute-Specific Data**

| **Size (bytes)** | **Description** | **Value** |
|---|---|---|
| 17 | AV pair identifier | "leap:session-key=" |
| 2 | Salt for encrypt routine | Random |
| 1 | Length of key field | 16 |
| 16 | Encrypt of key value | |
| 15 | Padding sub-field | From RFC 2548 |

The key value is encrypted in the same manner as the MS-MPPE-Send-Key attribute, as defined in RFC 2548.

For security reasons, it is necessary to encrypt certain attributes that are passed between a NAS (e.g., the AP 102) and the AS 110. "Salt-encryption" as discussed in the context of a vendor-specific attribute consists of an attribute of type 26 that contains a vendor ID and vendor-defined information. RADIUS defines a password-hiding mechanism for use with a username-password attribute in an Access Request; namely, that the value of the attribute is XORed with an octet-sequence based on a one-way MD5 digest of the shared secret and the Request Authenticator. Salt-encryption adds a unique two-octet Salt value to each attribute to be encrypted. This Salt would be concatenated with the shared secret and Request Authenticator as input to an MD5 digest to produce an initial 16-byte XOR value that is unique for each encrypted attribute in a RADIUS transaction. The initial and subsequent XOR values are used to encrypt the payload of the attribute. The length of the actual information portion of the attribute may be obfuscated by encoding the payload with the length of the actual data, followed by the data, followed by optional padding.

### DETAILED EXAMPLE

The following is a summary of the various hash words of a sample trace in an IEEE 802.1x standard format, and the derivation of which will be discussed in greater detail hereinbelow.
Client user username = dellvira;
Client password associated with username = dellvira;
AP shared secret = secret (for the AS 110);
LEAP client Password = dellvira;
NT Hash = MD4 hash of Unicode password, Unicode password is two bytes for a character instead of one; NT hash of password = 4E8612CC8A0558B89283C0580E58C951;
Challenge to client = 5E2A842AA64BDD27;
Client response = 02C91D9AEC747589239BF3E5EEF8DEFAA1EC8D34C0DB3CE3;
Double MD4 hash of Unicode password = 8E9B8CB54E96AD7D762C2B3F263F5EA7;
Challenge to RADIUS server = 578FC0651CCAE28E;
RADIUS response = 89E2A270F3D0365CE4812BCD11479CB182C2C00436D16723
Session key = MD5 (A cat B cat C cat D cat E), where cat = concatenate,
   A = PasswordHashHash[16];
   B = ChallengeToRadius[8];
   C = ChallengeToRadiusResponse[24];
   D = ChallengeToClient[8];
   E = ChallengeToClientResponse[24];
Session key =18CA91B6982C44CBDD4A53367CD6A07B;
Authenticator from previous RADIUS Request = 9D0310D10B4A43D9679E868405788EF0;
Salt for encrypt routine = 2C11;
AP secret with RADIUS server = secret;
Encrypted session key (from AS 110 to AP 102) = 78B60C798390BED47954A03B239EAB8AB3F27D8D24CF62CDD289F3D6E 991B49D

### DETAILED TRACE

As indicated hereinabove, the AP 102 operates in an initial state of blocking all non-EAPOL packets to or from the client 106. The detailed session key derivation algorithm begins with the client 106 signaling the AP 102 (also denoted as the NAS or Network Access Server in the following sample trace) with an EAPOL-START message.

```
 Client -> NAS (EAPOL-START).
         EAPOL Version:   01
         EAPOL Type:      01 = START
         Length:          00 00 = 0

         01 01 00 00
 **********************************************************************************
```

The trace continues with the AP 102 responding by sending an EAPOL packet with an EAP Identity Request message to the client 106.

```
 NAS -> Client (EAPOL: EAP Identity Request).

                         01 00 00 34 01 00 00 34   * ..4...4*
 01 00 6e 65 74 77 6f 72 6b 69 64 3d 43 49 53 43   *..networkid=CISC*
 4f 2c 6e 61 73 69 64 3d 43 69 73 63 6f 20 53 65   *O,nasid=Cisco Se*
 63 75 72 65 20 49 49 2c 70 6f 72 7 4 69 64 3d 30  *cure II,portid=0*

 EAPOL Version:      01
 EAPOL Type:         00 = EAP
 Length:             00 34 = 52 bytes
 EAP Contents:
       Code:         01 = REQUEST
       Identifier:   00
       Length:       00 34 = 52 bytes
       Type:         01 = IDENTITY
       Value:        "networkid=CISCO,nasid=Cisco Secure II,portid=0"
 **********************************************************************************
```

The client 106 then responds to the AP 102 with an EAP Identity Response message that is the client username of "dellvira".

```
 Client -> NAS (EAP: Identity Response)

 01 00 00 0d 02 00 00 0d 01 64 65 6c 6c 76 69 72 *.....dellvir*
 61                                         *a.....*
 EAPOL Version:      01
 EAPOL Type:         00 = EAP
 Length:             00 0d = 13 bytes
 EAP Contents:
      Code:          02 = RESPONSE
      Identifier:    00
      Length:        00 0d = 13 bytes
      Type:          01 = IDENTITY        Value: "dellvira"
  **********************************************************************************
```

The AP 102 then forwards the received identity response of the client 106 to the AS 110.

```
 NAS -> RADIUS (Forwarding Identity Response)

                             01 03 00 84 31 91 a0 a3   * ...1...*
 a2 44 ce c8 90 d8 9e 1d 62 84 ff c0 01 0a 64 65       *.D.....b....de*
 6c 6c 76 69 72 61 04 06 c0 a8 82 e4 1e 0e 30 30       *llvira.....00*
 34 30 39 36 34 37 36 65 63 36 1f 0e 30 30 34 30       *4096476ec6..0040*
 39 36 33 35 65 38 65 64 20 11 43 69 73 6 3 6f 20      *9635e8ed .Cisco *
 53 65 63 75 72 65 20 49 49 05 06 00 00 00 1d 0c       *Secure II.....*
 06 00 00 05 78 3d 06 00 00 00 13 4f 0f 02 00 00       *....x=.....0....*
 0d 01 64 65 6c 6c 76 69 72 61 50 12 0b bf bd d9       *..dellviraP.....*
 46 f9 b6 a8 53 7b 85 4c 17 b 2 06 e9                  *F...S{.L.....*

 RADIUS Code:      01 = REQUEST
 Identifier:       03
 Length:           00 84
 Authenticator:    31 91 a0 a3 a2 44 ce c8 90 d8 9e 1d 62 84 ff c0
 ATTRIBUTES:
      Type:        01= User-Name
      Length:      0a = 10
      Value:       "dellvira"
      Type:        04 = NAS-IP-Address
      Length:      06 = 6
      Value:       c0 a8 82 e4
      Type:        1e = Called-ID
      Length:      0e = 14
      Value:       "004096476ec6"
      Type:        1f = Calling-ID
      Length:      0e = 14
      Value:       "00409635e8ed"
      Type:        20 = NAS-ID
      Length:      11 = 17
      Value:       "Cisco Secure II"
      Type:        05 = NAS-Port
      Length:      06 = 6
      Value:       1d = 29
      Type:        0c = Framed-MTU
      Length:      06 = 6
      Value:       05 78 = 1400
      Type:        3d = NAS-Port-Type
      Length:      06 = 6
      Value:       00 00 00 13 = Wireless
      Type:        4f = EAP
      Length:      0f = 15
      Value:       EAP CONTENTS
                   Code:           02 = RESPONSE
                   Identifier:     00
                   Length:         00 0d = 13 bytes
                   Type:           0 1 = IDENTITY
                   Value:          "dellvira"
       Type:       50 = Message Authenticator
       Length:     12 = 18
       Value:      0b bf bd d9 46 f9 b6 a8 53 7b 85 4c 17 b2 06 e9
 **********************************************************************************
```

The AS 110 responds to the AP 102 with a Challenge Request having EAP attributes containing a LEAP server challenge.

```
 RADIUS -> NAS (Challenge Request)

                             0b 03 00 3e 60 ff ce 59   * ..> ..Y*
 93 10 fe 2f 0c 22 6c 79 7a 04 4e 7b 50 12 3e 6b       *... /."lyz.N{P.>k*
 98 64 b8 a7 37 b2 6b 64 ab e3 3d 73 28 8a 4f 18       *.d..7.kd..=s(.O.*
 01 00 00 16 11 01 00 08 5e 2a 84 2a a6 4b dd 27       *.....^*.*.K.'*
 6c 6c 76 69 72 61                                     *llvira.....*

 RADIUS Code:      0b = CHALLENGE
 Identifier:       03
 Length:           00 3e
 Authenticator:    60 ff ce 59 93 10 fe 2f 0c 22 6c 79 7a 04 4e 7b
 ATTRIBUTES:
      Type:        50 = Message Authenticator
      Length:      12 =18
      Value:       3e 6b 98 64 b8 a7 37 b2 6b 64 ab e3 3d 73 28 8a
      Type:        4f = EAP
      Length:      18 = 24
      Value:       EAP CONTENTS
                 Code:       01 = REQUEST
                 Identifier: 00
                 Length:     00 16 = 22 bytes
                 Type:       11 = LEAP CHALLENGE
                 Value:      LEAP CHALLENGE CONTENT
                             Value:
                             Version:                01
                             Not Used:               00
                             Len. of challenge       08
                             Challenge:              5e 2a 84 2a
                                                     a6 4b dd 27
                             Username:               6c 6c 76 69
                                                     7261
  **********************************************************************************
```

The AP 102 receives the EAPOL packet with LEAP Challenge Request from the AS 110 and forwards it to the client 106.

```
 NAS -> Client (Forwarding Challenge Request)

                                            01 00 00 16  * ...*
 01 00 00 16 11 01 00 08 5e 2a 84 2a a6 4b dd 27         *.....^*.*.K.'*
 6c 6c 76 69 72 61                                       *llvira.....*
 EAPOL Version:     01
 EAPOL Type:        00 = EAP
 Length             00 16 = 22 bytes
 EAP Contents:
      Code:         01 = REQUEST
      Identifier:   00
      Length:       00 16 = 22 bytes
      Type:         11 = LEAP CHALLENGE
      Value:        LEAP CHALLENGE CONTENT
                    Value:
                    Version:            01
                    Not Used:           00
                    Len. Of challenge:  08
                    Challenge:          5e 2a 84 2a
                                        a6 4b dd 27
                    Username:            6c 6c 76 69
                                        72 61
 **********************************************************************************
```

The client 106 receives the RADIUS Challenge Request from the AP 102 and responds to the AP 102 with a LEAP Challenge Response.

```
 Client -> NAS (Challenge Response)

              01 00 00 28 02 00 00 28 11 01 00 18   * ..(...(....*
 02 c9 1d 9a ec 74 75 89 23 9b f3 e5 ee f8 de fa    *.....tu.#.....*
 al ec 8d 34 c0 db 3c e3 64 65 6c 6c 76 69 72 61    *...4..<.dellvira*

 EAPOL Version:     01
 EAPOL Type:        00 = EAP
 Length:            00 28 = 40 bytes
 EAP Contents:
      Code:         02 = RESPONSE
      Identifier:   00
      Length:       00 28 = 40 bytes
      Type:         11 = LEAP CHALLENGE
      Value:        LEAP CHALLENGE RESPONSE CONTENT
                    Value:
                    Version:            01
                    Not Used:           00
                    Len. of Challenge:  18
                    Challenge Resp.:    02 c9 1d 9a
                                        ec 74 75 89
                                        23 9b f3 e5
                                        ee f8 de fa
                                        a1 ec 8d 34
                                        c0 db 3c e3
                    Username:           64 65 6c 6c
                                        76697261
 **********************************************************************************
```

The AP 102 receives the LEAP Challenge Response from the client 106, reconstructs the packet for EAPOL, and forwards it to the AS 110 as a RADIUS Access Request with EAP attributes.

```
 NAS -> RADIUS (Forwarding Challenge Response)

                             01 04 00 9f 4a 1c 97 bd   * ...J...*
 27 b5 a3 3f 79 49 fe ea e4 7d 08 92 01 0a 64 65       *'..?yI...}....de*
 6c 6c 76 69 72 61 04 06 c0 a8 82 e4 1e 0e 30 30       *llvira.....00*
 34 30 39 36 34 37 36 65 63 36 1f 0e 30 30 34 30       *4096476ec6..0040*
 39 36 33 35 65 38 65 64 20 11 43 69 73 63 6f 20       *9635e8ed .Cisco *
 53 65 63 75 72 65 20 49 49 05 06 00 00 00 1d 0c       *Secure II.....*
 06 00 00 05 78 3d 06 00 00 00 13 4f 2a 02 00 00       *....x=.....0*...*
 28 11 01 00 18 02 c9 1d 9a ec 74 75 89 23 9b f3       *(.....tu.#..*
 e5 ee f8 de fa a1 ec 8d 34 c0 db 3c e3 64 65 6c       *.....4..<.del*
 6c 76 69 72 61 50 12 cd d8 1b 2a ea 4c 47 3a b4       *lviraP....*.LG:.*
 70 43 8f 8b 20 1c 01                                  *pC.. .....*

 RADIUS Code:     01 = REQUEST
 Identifier:      03
 Length:          00 9f = 159
 Authenticator:   4a 1c 97 bd 27 b5 a3 3f 79 49 fe ea e4 7d 08 92
 ATTRIBUTES:
      Type:       01 = User-Name
      Length:     0a = 10
      Value:      "dellvira"

      Type:       04 =NAS-IP-Address
      Length:     06 = 6
      Value:      c0 a8 82 e4

      Type:       1e = Called-ID
      Length:     0e = 14
      Value:      "004096476ec6"

      Type:       1f = Calling-ID
      Length:     0e = 14
      Value:      "00409635e8ed"

      Type:       20 = NAS-ID
      Length:     11 = 17
      Value:      "Cisco Secure II"

      Type:       05 = NAS-Port
      Length:     06 = 6
      Value:      1d = 29

      Type:       0c = Framed-MTU
      Length:     06 = 6
      Value:      05 78 = 1400

      Type:       3d = NAS-Port-Type
      Length:     06 = 6
      Value:      00 00 00 13 = Wireless

      Type:       4f = EAP
      Length:     2A = 42
      Value:      EAP CONTENTS
                  Code:        02 = RESPONSE
                  Identifier:          00
                  Length:              00 28 = 40 bytes
                  Type:                11 = LEAP CHALLENGE
                  Value:               LEAP CHALLENGE RESPONSE CONTENT
                  Value:
                  Version:             01
                  Not Used:            00
                  Len. of Challenge:   18
                  Challenge Resp.:     02 c9 1d 9a
                                       ec 74 75 89
                                       23 9b f3 e5
                                       ee f8 de fa
                                       a1 ec 8d 34
                                       c0 db 3c e3
                  Username:            64 65 6c 6c
                                       76697261
      Type:       50 = Message Authenticator
      Length:     12 = 18
      Value:      cd d8 1b 2a ea 4c 47 3a b4 70 43 8f 8b 20 1c 01
 **********************************************************************************
```

The AS 110 then determines if the access request is valid. If not, the AS 110 sends a deny message with an EAP fail attribute to the AP 102. If valid, the AS 110 sends an access challenge with an EAP success attribute. The trace code for the success scenario is provided hereinbelow.

```
 RADIUS -> NAS (Challenge Request - EAP SUCCESS)

                            02 04 00 3e 77 31 e9 33   * ..>w1.3*
 33 c1 31 6f e2 f1 a9 4e e5 58 ce fc 50 12 dc 6a      *3.lo...N.X..P..j*
 b8 43 df 24 d7 72 32 80 83 96 9f 1a b2 2b 1b 06      *.C.$.r2.....+..*
 00 00 00 b4 1c 06 00 00 00 2d 08 06 ff ff ff ff      *.....*
 4f 06 03 00 00 04 *O.....*
 RADIUS Code:      02 = ACCEPT (Later version is in a CHALLENGE)
 Identifier:       04
 Length:           00 2e
 Authenticator:    77 31 e9 33 33 c1 31 6f e2 f1 a9 4e e5 58 ce fc
 ATTRIBUTES:
       Type:       50 = Message Authenticator
       Length:     12 = 18
       Value:      dc 6a b8 43 df 24 d7 72 32 80 83 96 9f 1a b2 2b

       Type:       1b = Session Timeout
       Length:     06
       Value:      00 00 00 b4 = 180 seconds

       Type:       1c = Idle Timeout
       Length:     06
       Value:      00 00 00 2d

       Type:       08 = Framed IP Address
       Length: 06
       Value: ff ff ff ff

       Type:       4f = EAP
       Length:     06 = 6 bytes
       Value:      EAP CONTENTS
                   Code: 03 = SUCCESS
                   Identifier: 00
                   Length: 00 04 = 4 bytes
 **********************************************************************************
```

The AP 102 receives the RADIUS access-challenge message from the,AS 110 as an EAPOL packet with EAP code contents of a success, and forwards it to the client 106.

```
 NAS -> Client (Forwarding EAP-SUCCESS)
 01 00 00 04 03 00 00 04                                *.....*

 EAPOL Version:    01
 EAPOL Type:       00 = EAP
 Length:           00 04 = 4
 EAP Contents:
      Code:        03 = SUCCESS
      Identifier:  00
      Length:      0004
 **********************************************************************************
```

The client 106 receives success message for the AP 102 and initiates its own LEAP Challenge Request to the AS 110 via the AP 102.

```
 Client -> NAS (Challenge Request)

 01 00 00 18 01 00 00 18 11 01 00 08 57 8f c0 65         *.....W..e*
 1c ca e2 8e 64 65 6c 6c 76 69 72 61                     *....dellvira....*

 EAPOL Version:    01
 EAPOL Type:       00 = EAP
 Length:           00 18 = 24
 EAP Contents:
       Code: 01 = REQUEST
       Identifier: 00
       Length: 00 18 = 24 bytes
       Type: 11 = LEAP CHALLENGE
       Value: LEAP CHALLENGE CONTENT
                   Value:
                   Version:            01
                   Not Used:           00
                   Len of Challenge:   08
                   Challenge:          57 8f c0 65
                                       1c ca e2 8e
                   Username:           64 65 6c 6c
                                       76 69 72 61
 **********************************************************************************
```

The AP 102 in turn forwards the client Challenge Request to the AS 110 as a RADIUS request with EAP attributes.

```
 NAS -> RADIUS (Challenge Request)

                             01 05 00 8f 9d 03 10 d1     * .....*
 0b 4a 43 d9 67 9e 86 84 05 78 8e f0 01 0a 64 65         *.JC.g....x....de*
 6c 6c 76 69 72 61 04 06 c0 a8 82 e4 1e 0e 30 30         *llvira.....00*
 34 30 39 36 34 37 36 65 63 36 1f 0e 30 30 34 30         *409 6476ec6..0040*
 39 36 33 35 65 38 65 64 20 11 43 69 73 63 6f 20         *9635e8ed .Cisco *
 53 65 63 75 72 65 20 49 49 05 06 00 00 00 1d 0c         *Secure II.....*
 06 00 00 05 78 3d 06 00 00 00 13 4f 1a 01 00 00         *....x=.....0....*
 18 11 01 00 08 57 8f c0 65 1c ca e 2 8e 64 65 6c        *.....W..e....del*
 6c 76 69 72 61 50 12 54 7b 09 1b 6b 68 61 79 ec         *lviraP.T{..khay.*
 b0 7b 21 34 20 bf 40                                    *.{!4 .@.....*
 RADIUS Code:      01 = Request
 Identifier:       05
 Length:           00 8f= 143
 Authenticator:    9d 03 10 d1 0b 4a 43 d9 67 9e 86 84 05 78 8e f0
 ATTRIBUTES:
      Type:        01 = User-Name
      Length:      0a = 10
      Value:       "dellvira"

                   Type: 04 = NAS-IP-Address
      Length:      06 = 6
      Value:       c0 a8 82 e4

      Type:        1e = Called-ID
      Length:      0e = 14
      Value:       "004096476ec6"

      Type:        1f = Calling-ID
      Length:      0e = 14
      Value:       "00409635e8ed"

      Type:        20 = NAS-ID
      Length:      11 = 17
      Value:       "Cisco Secure II"

      Type:        05 = NAS-Port
      Length:      06 = 6
      Value:       1d = 29

      Type:        0c = Framed-MTU
      Length:      06 = 6
      Value:       05 78 = 1400

      Type:        3d = NAS-Port-Type
      Length:      06 = 6
      Value:       00 00 00 13 = Wireless

      Type:        4f = EAP
      Length:      1A = 26
      Value:       EAP CONTENTS
                   Code:         01 = CHALLENGE
                   Identifier:   00
                   Length:       00 18 = 24 bytes
                   Type:         11 = LEAP CHALLENGE
                   Value:        LEAP CHALLENGE CONTENT
                          Value:
                          Version:            01
                          Not Used:           00
                          Len of Challenge:   08
                          Challenge:          57 8f c0 65
                                              1c ca e2 8e
                          Username:           64 65 6c 6c
                                              76 69 72 61
      Type:         50 = Message Authenticator
      Length:       12 = 18
      Value:        54 7b 09 1b 6b 68 61 79 ec b0 7b 21 34 20 bf 40
 **********************************************************************************
```

The AS 110 responds to the AP 102 with an access-accept message with EAP attributes containing a LEAP client Challenge Response and special attributes containing the session and cell multicast keys.

```
 RADIUS -> NAS (ACCEPT with Challenge Response, with special vendor Key)

                             02 05 00 9d 7f 89 6a 4d   * .....jM*
 c3 ac 4e 37 78 b6 61 5e 84 db 11 d7 50 12 e2 8a       *..N7x.a^....P...*
 49 af cb b2 2a ae 0e e8 71 42 9f c8 88 ff 1b 0 6      *I...*...qB.....*
 00 00 00 b4 1c 06 00 00 00 2d 08 06 ff ff ff ff       *..... -.....*
 4f 2a 02 00 00 28 11 01 00 18 89 e2 a2 70 f3 d0       *O*...(.....p..*
 36 5c e4 81 2b cd 11 47 9c b1 82 c2 c0 04 36 d1       *6 \..+..G.....6.*
 67 23 64 65 6c 6c 76 69 72 61 1a 3b 00 00 00 09       *g#dellvira.;....*
 01 35 6c 65 61 70 3a 73 65 73 73 69 6f 6e 2d 6b       *.5leap:session -k*
 65 79 3d 2c 11 78 b6 0c 79 83 90 be d4 79 54 a0       *ey=,.x..y....yT.*
 3b 23 9e ab 8a b3 f2 7d 8d 24 cf 62 cd d2 89 f3       *;#.....}.$.b....*
 d6 e9 91 b4 9d                                        *.....*

 RADIUS Code:     02 = ACCEPT
 Identifier:      05
 Length:          00 9d
 Authenticator:   7f 89 6a 4d c3 ac 4e 37 78 b6 61 5e 84 db 11 d7
 ATTRIBUTES:
      Type:       50 = Message Authenticator
      Length:     12 = 18
      Value:      e2 8a 49 af cb b2 2a ae 0e e8 71 42 9f c8 88

      Type:       1b = Session Timeout
      Length:     06
      Value:      00 00 00 b4 = 180 seconds
 
      Type:       1c = Idle Timeout
      Length:     06
      Value:      00 00 00 2d

      Type:       08 = Framed IP Address
      Length:     06
      Value:      ff ff ff ff

      Type:       4f = EAP
      Length:     2A = 42
      Value:      EAP CONTENTS
                  Code:               02 = RESPONSE
                  Identifier:         00
                  Length:             00 28 = 40 bytes
                  Type:               11 = LEAP CHALLENGE
                  Value:              LEAP CHALLENGE RESPONSE CONTENT
                  Value:
                  Version:            01
                  Not Used:           00
                  Len of Challenge:   18
                  Challenge Resp.:    89 e2 a2 70
                                      f3 d0 36 5c
                                      e4 81 2b cd
                                      11 47 9c b1
                                      82 c2 c0 04
                                      36 d1 67 23
                  Username:           64 65 6c 6c 76 69 72 61

                  Type:     1a = Vendor
                  Length:   3b = 59
                  Value:    00 00 00 09 = Cisco
                        Type:        01 = Send-key
                        Length:      35 = 53
                        Value:       Reference to RFC 2548
                                     AV pair identifier
                                     "leap:session-key="
                                     6c 65 61 70 3a 73 65 73
                                     73 69 6f 6e 2d 6b 65 79
                                     3d

                                     Salt for encryption routine
                                     2c 11

                                     Encrypted block
                                     1 byte length
                                     16 bytes of encrypted key
                                     15 bytes of padding

                                     78 b6 0c 79 83 90 be d4
                                     79 54 a0 3b 23 9e ab 8a
                                     b3 f2 7d 8d 24 cf 62 cd
                                     d2 89 f3 d6 e9 91 b4 9d
 **********************************************************************************
```

The AP 102 receives from the AS 110 the EAPOL packet with LEAP client Challenge Response, and forwards the Response to the client 106.

```
 RADIUS: Sending EAPOL packet to client

                                           01 00 or 28   * ..(*
 02 00 00 28 11 01 00 18 89 e2 a2 70 f3 d0 36 5c         * ...(.....p..6 \*
 e4 81 2b cd 11 47 9c b1 82 c2 c0 04 36 d1 67 23         *..+..G......6.g#*
 64 65 6c 6c 76 69 72 61                                 *dellvira.....*

 EAPOL Version:     01
 EAPOL Type:        00 = EAP
 Length:            00 28 = 40 bytes
 EAP Contents:
      Code:         02 = RESPONSE
      Identifier:   00
      Length:       00 28 = 40 bytes
      Type:         11 = LEAP CHALLENGE
      Value:        LEAP CHALLENGE RESPONSE CONTENT
                    Value:
                    Version:             01
                    Not Used:            00
                    Len. of Challenge:   18
                    Challenge Resp.:     89 e2 a2 70
                                         f3 d0 36 5c
                                         e4 81 2b cd
                                         11 47 9c b1
                                         82 c2 c0 04
                                         36 d1 67 23
                    Username:            64 65 6c 6c 76 69 72 61
 **********************************************************************************
```

The AP 102 sends to the client 106 an EAPOL-KEY packet with a cell multicast key.

```
 NAS -> Client (EAPOL-KEY Multicast Key)

             01 03 00 39 01 00 0d 00 00 00 00 00   * ..9.....*
 3b 00 01 60 44 77 8b 72 25 4d 6b 6f 56 37 a0 49   *;.. Dw.r%MkoV7.I*
 d8 1a b1 00 32 51 12 ab e2 99 5b a5 36 15 32 6d   *....2Q....[.6.2m*
 f3 e6 3a 4d b4 be 71 2e d3 e3 0b 1c d6 99 07 64   *..:M..q.....d*
 7a                                                *z.....*

 EAPOL Version:     01
 EAPOL Type:        03 = EAPOL-KEY
 Length:            00 39 = 57 bytes
 Descriptor Type:   01 = RC4
 Key Length:        00 0d = 13
 Replay:            00 00 00 00 00 3b 00 01
 Key Vector:        60 44 77 8b 72 25 4d 6b 6f 56 37 a0 49 d8 1a b1
 Key Index:         00
 Key Signature:     32 51 12 ab e2 99 5b a5 36 15 32 6d f3 e6 3a 4d
 Key:               b4 be 71 2e d3 e3 0b 1c d6 99 07 64 7a
 **********************************************************************************
```

The AP 102 sends to the client 106 an EAPOL-KEY packet with session parameters including the session ID and key length.

```
 RADIUS: Sending EAPOL session key parameters

 01 03 00 2c 01 00 0d 00 00 00 00 00 3b 00 02 4e   *...,.....;..N*
 d0 4f 31 35 65 1e e2 0a f1 54 c8 00 e3 57 45 83   *.015e....T...WE.*
 a1 3b 19 01 60 4c 3d 05 26 1d e6 9d 82 49 47 f7   *.;..'L=.&....IG.*

 EAPOL Version:     01
 EAPOL Type:        03 = EAPOL-KEY
 Length             00 2c = 44 bytes
 Descriptor Type:   01 = RC4
 Key Length:        00 0d = 13
 Replay:            00 00 00 00 00 3b 00 02
 Key Vector:        4e d0 4f 31 35 65 1e e2 0a f1 54 c8 00 e3 57 45
 Key Index:         83 = LEAP Session Key (Index 3)
 Key Signature:     a1 3b 19 01 60 4c 3d 05 26 1d e6 9d 82 49 47 f7
 Key:
```

The client 106 then installs the keys, and the AP 102 unblocks all packet traffic to and from the client 106.

Referring now to FIG. 7, there is illustrated a block diagram of a hardware network interface device 700 incorporating the LEAP algorithm for use in a wireless client that communicates with the AP 102, in accordance with a disclosed embodiment. The interface device 700 (similar to client interface 206, AP interface 200, and AS 110 interface 212) comprises control logic 702 for controlling onboard functions. For example, the control logic 702 operatively connects to algorithm logic 704 via an algorithm interconnect 705 such as a Field Programmable Gate Array (FPGA) device that contains the disclosed LEAP algorithm encoded therein. Alternatively, the algorithm logic 704 can be a non-volatile architecture (e.g., EEPROM) such that the algorithm is stored therein and uploaded to the control logic 702 for high-speed execution under normal operating conditions. The network interface device 700 includes a memory 706 operatively connected to the control logic 702 for providing information exchange and storage during normal operation of the interface device 700. The memory 706 is suitably that which conforms to the speed and architecture requirements of the control logic 702 (e.g., flash memory), and the form factor of the interface device 700. It is appreciated that the memory 706 and the algorithm device 704 may be separately or both designed into the control logic 702.

The network interface device 700 also comprises a wireless (or wired) transmit/receive interface 708 for communicating wirelessly to the AP 102 in accordance with the IEEE 802.11 and IEEE 802.1x protocols, and according to the disclosed LEAP algorithm. The interface device 700 also comprises a hardware interconnect interface 710 for providing power and communication signals between the network interface device 700 and the wireless client device 110 in which it is utilized. The control logic 702 connects to the hardware interconnect 710 over a hardware interface bus 712. The control logic 702 communicates with the transmit/receive interface 708 over a bus pathway 714 to facilitate communication of EAP and LEAP packets to and from the AP 102.

Note that the interface device 700 may be a PC Card (i.e., a card conforming to an earlier PCMCIA standard) that is inserted into a proprietary slot of, for example, a notebook (or laptop) computer. Alternatively, the interface device 700 incorporates the disclosed novel features and conforms to the CardBus standard. Further, the interface device 700 may be designed into a motherboard of the wireless device 110, such that a single control logic 702 (or processor) handles all board motherboard functions including communication interfacing to the AP 102.

The type of wireless client 106 suitable to include the disclosed algorithm includes, but is not limited to, for example, a portable handheld device with the interface device 700, a desktop computer having the wireless interface device 700 that conforms to a PCI standard, and a portable electronic tablet (e.g., PDA, etc.).

LEAP is just one type of authentication that can run above EAP. Another is EAP-TLS (EAP-Transport Level Security). EAP-TLS provides for mutual authentication, and integrity-protected ciphersuite negotiation and key exchange between two endpoints. The EAP-TLS conversation will typically begin with the authenticator and the peer negotiating EAP The authenticator will then send an EAP-Request/Identity packet to the peer, and the peer will respond with an EAP-Response/Identity packet to the authenticator, containing the peer user ID. From this point forward, while nominally the EAP conversation occurs between the PPP authenticator and the peer, the authenticator may act as a pass-through device, with the EAP packets received from the peer being encapsulated for transmission to the RADIUS server or backend security server. Further description of EAP-TLS can be obtained from sources commonly known to one skilled in the art.

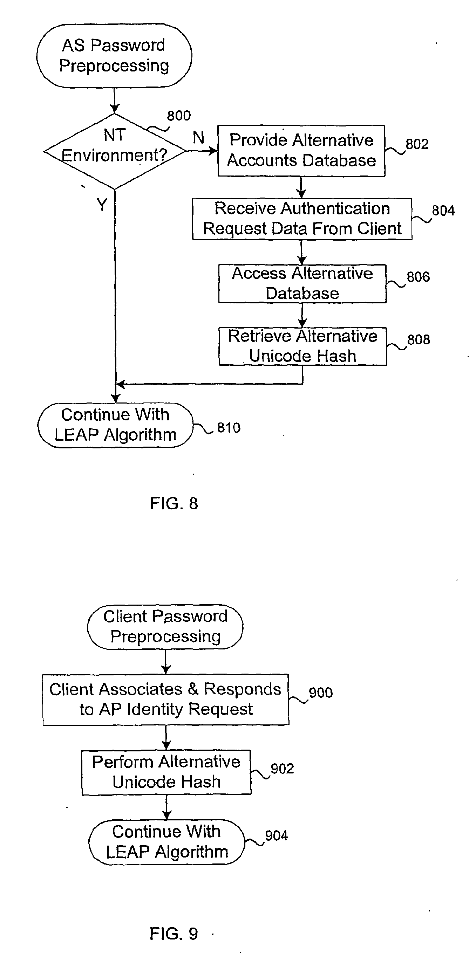

Referring now to FIG 8, there is illustrated a flow chart of the password preprocessing algorithm implemented for an alternative password hash, according to a disclosed embodiment. As indicated hereinabove, and according to its preferred implementation, LEAP is utilized in a Microsoft NT™ environment with an NT-based accounts database. The encoding scheme used on the user Unicode password is the MD4 hash function which is directly compatible with the LEAP architecture, since the input to the LEAP algorithm in both the client and network authentication process is the MD4 hash of the user Unicode password. Thus when implementing LEAP in the NT environment, LEAP is capable of using directly the same database as the network environment.

However, not all networks have an NT-based architecture of the user accounts database, and consequently hash processing may be performed using a hash function different than MD4, i.e., an "alternative" hash function such as SHA-1 for generating an alternative password-encoded user accounts database. Thus the current preferred implementation of LEAP cannot be utilized for such non-NT networks, but requires an extra password preprocessing step to generate the input to the LEAP algorithm. For example, the alternative user accounts database may include a large number of alternative hash-processed passwords using the SHA-1 hash function of the client Unicode password, or any other hash function known to those skilled in the art.

The disclosed LEAP password preprocessing algorithm overcomes this problem where the client 106, AS 110, and the user accounts database use non-MD4 alternative hash functions by continuing to allow substantially synchronous network access information and client access information LEAP processing so that the client 106 and the RADIUS server 110 are at equivalent numerical starting points even when utilizing the alternative hash functions. This is accomplished by providing in advance the alternative user accounts database on the network. As indicated hereinabove, the accounts database may reside local to the AS 110 or remote therefrom. In any case, the accounts database is made accessible to the AS 110 for the authentication process.

For example, consider an
accounts database of user passwords hashed according to the SHA-1 hash function. To complete the authentication process, the RADIUS server 110 and the client 106 need to complete the mutual handshaking process in a predetermined duration of time utilizing an equivalent code word (i.e., hashed word) before LEAP processing can proceed. Thus the encoding scheme used for both the accounts database and the client 106 must be the same in order for the equivalent code number to be generated. In this particular example, the equivalent code word that will ultimately be obtained is the SHA-1 hash of the user Unicode password. Thus encoded client access information and encoded network access information each comprise the SHA-1 hash of the user Unicode password.

In such non-NT implementations, as well as the NT-based implementations, the encoding scheme of both the client and the network environment is known in advance. Thus when application is to a non-NT accounts database environment, the disclosed password preprocessing algorithm can be implemented in advance in both the client and the network-based authentication systems. Thus the LEAP authentication process can proceed normally in the non-NT implementation as it would in the NT-based implementation.

Where the accounts database is an NT-based database, the accounts database includes encoded user passwords (or encoded client access information) that are generated by hashing the user Unicode password with the MD4 hash function, as indicated hereinabove with blocks 400 and 402 of FIG. 4a. In this particular non-NT database embodiment which utilizes the alternative SHA-1 hash function for generating an alternative accounts database of encoded user Unicode passwords, the RADIUS AS server 110 accesses the alternative accounts database that includes the SHA-1 hash of the user Unicode password. The disclosed LEAP algorithm then continues by taking the MD4 hash of the SHA-1 hashed Unicode password, instead of the Unicode password (as illustrated in FIG 4a and 4b).

Continuing with the flow chart of FIG. 8, flow begins at a decision block 800 where a determination is made as to whether the environment into which LEAP is implemented is an NT-based environment or not. If not, flow is the "N" path to a function block 802 where the alternative accounts database is installed in the network such that the AS 110 can access the alternative database during the authentication process. In the disclosed embodiment, the alternative accounts database is provided manually in that the network administrator knows in advance what encoding scheme will be implemented in the authentication process. Note that in more robust implementations where it is known that a plurality of more common alternative encoding functions are being utilized in the industry, a plurality of corresponding alternative accounts database may be provided such that the AS 110 can automatically access the proper alternative database according to the encoding scheme utilized by the client 106, and retrieve the correct encoded Unicode password, where provided.

Once the alternative database is in place, flow continues to a function block 804 where the AS 110 receives authentication request data from the client 106. In response thereto, the AS 110 accesses the user accounts database (either hosted local to the AS 110 or remotely, e.g., in the user accounts server 112), as indicated in a function block 806. In a function block 808, the AS 110 retrieves the alternatively-hashed user Unicode password associated with the client username provided during user login. In a function block 810, the LEAP algorithm of the AS 110 then continues as normal by performing the MD4 hash of the alternatively-hashed user Unicode password.

If the environment is NT-based, flow is from the "Y" path of decision block 800 to the function block 810 to perform authentication with the LEAP algorithm.

Referring now to FIG 9, there is illustrated a flow chart of password preprocessing on the client, according to a disclosed embodiment. In an NT-based environment, the client 106 would normally come preconfigured with an encoding scheme that utilizes an MD4 hash of the Unicode version of the client user password. However, where the client operating system is a non-NT operating system, encoding scheme will be non-MD4, thus password preprocessing needs to be performed such that AS 110 and client 106 perform the LEAP algorithm on the same initial word in order for the equivalent code number to be generated. In this particular example, the SHA-1 hash function is utilized by the client 106 as the encoding scheme. Thus after the client 106 performs the SHA-1 hash of the Unicode password, LEAP processing on the client 106 will proceed as normal by performing the MD4 hash thereof. The client 106 and the RADIUS AS 110 will now be at numerically equivalent processing points such that the LEAP algorithm can be performed.

Continuing with the flow chart of FIG. 9, flow begins at a function block 900 where the client 106 associates and responds to the AP 102 identity request. Once the client user has entered his or her username and password, flow is to a function block 902 where the SHA-1 hash function (i.e., denoted the alternative hash) is utilized to encode the client password. To begin normal LEAP algorithm processing, the alternative hash of the client Unicode password is then MD4-hashed, as indicated in a function block 904.

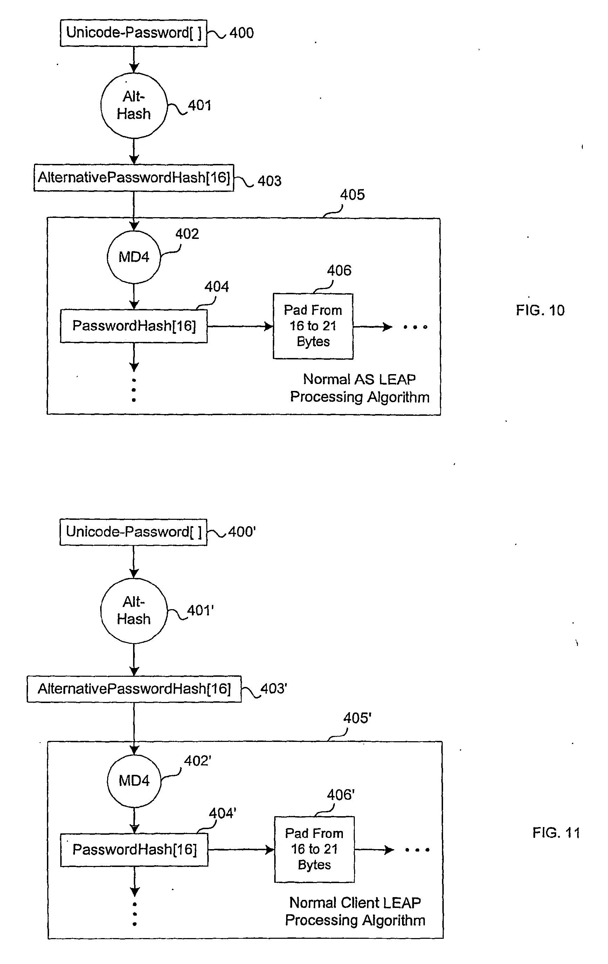

Referring now to FIG. 10, there is illustrated a password preprocessing flow diagram of the LEAP encryption process for deriving a session key in the AS 110 when utilizing a non-NT database implementation, in accordance with a disclosed embodiment. Blocks 400, 401, and 403 occur in advance, in that once the operating environment is determined as a non-NT environment, the alternative hash 401 of the Unicode password 400 (denoted as ultimately being AlternativePasswordHash[16] 403) is included in the alternative accounts database. When the client username has been received by the AS 110 and forwarded to the user accounts database (which may be on a separate network server node or hosted by the AS 110), the single hash alternative password 403 is accessed form the user accounts database, the normal LEAP algorithm 405 of the AS 110 (of FIG. 4a) continues by applying the MD4 hash function 402 thereto, and completing the process of generating the AS session key 438, where authentication is successful.

Referring now to FIG. 11, there is illustrated a password preprocessing flow diagram of the LEAP encryption process for deriving a session key in the client 106 when utilizing a non-NT database implementation, in accordance with a disclosed embodiment. Once the client password has been entered into the client device 106 by the client user, the Unicode password 400' generated internally and hashed by the alternative hash function (denoted Alt-Hash) 401' to generate a 16-bit alternative single hash password hash 403' (denoted as AlternativePasswordHash[16]). Note also that in an alternative embodiment, the alternative hash of the user Unicode password 400' may have already been prepared in advance and stored in a client database of the client device 106 for retrieval once the client username is entered in an association process with the AP 102. In such an implementation, access to use that client device 106 may be limited onlv to authorized users whose alternative hash 403 is found in the client database.

In any case, once the single hash alternative password 403' has been generated, the normal LEAP algorithm 405' for the client 106 (of FIG. 4b) continues by applying the MD4 hash function 402' thereto, and completing the process of generating the client session key 438'.

As indicated above, both the client 106 and the AS 110 are then in a state where mutual authentication can be completed, and network access provided, if successfully authenticated. Note that the password preprocessing algorithm can also be implemented in hardware in accordance with the LEAP algorithm implementation of FIG 7.

Although the preferred embodiment has been described in detail, it should be understood that various changes, substitutions, and alterations can be made therein without departing from the scope of the invention as defined by the appended claims.

## Claims

1. A method of authenticating a client (106) in a Lightweight Extensible Authentication Protocol Environment, the method comprising:
receiving authentication request data from a client (106);
retrieving a first password hash of a user password associated with a client username provided during login, the first password hash having been created using a first predetermined hash function;
performing a second hash function on the first password hash, thereby creating a second password hash; and
authenticating the client (106) via the Lightweight Extensible Authentication Protocol using the second password hash.

2. The method of claim 1 wherein the authentication request is encoded using a predetermined encoding scheme.

3. The method of claim 1 or 2, comprising retrieving the first password hash from an accounts database (216).

4. The method of claim 3 wherein the authentication server has access to a plurality of alternative databases, the method further comprising matching the encoding scheme of the authentication request to a one of the plurality of alternative databases.

5. A method according to any of the preceding claims, further comprising:
determining the encoding scheme used by the client (106);
accessing a selected accounts database in dependence on the determined encoding scheme and retrieving the first password hash from the selected database; and
performing the second hash function on the retrieved first password hash when it is determined that the encoding scheme does not use the second hash function.

6. A method according to any preceding claim, wherein the client is adapted to use a password encoding scheme based on the first hash function, the steps comprising, at the client (106):
associating with an access point (102);
responding to an access point identity request;
encoding a client password using the first hash function to produce a first password hash;
performing the second hash function on the first password hash, thereby creating a second password hash; and
authenticating the client (106) on the network (108) using the second password hash.

7. A method according to any of the preceding claims, comprising deriving a session key using the second password hash.

8. A method according to any of the preceding claims, wherein the second hash function is an MD4 or MD5 hash function.

9. A method according to any of the preceding claims, wherein the first hash function is a SHA-1 hash function.

10. A computer-readable medium comprising instructions for performing a method of authenticating a client (106) in a Lightweight Extensible Authentication Protocol Environment, the method including the steps of:
receiving authentication request data from a client (106);
retrieving a first password hash of a user password associated with a client username provided during login, the first password hash having been created using a first predetermined hash function;
performing a second hash function on the first password hash, thereby creating a second password hash; and
authenticating the client (106) via the Lightweight Extensible Authentication Protocol using the second password hash.

11. A computer-readable medium according to Claim 10, further adapted to perform a method according to any of Claims 2 to 9.

12. A computer-readable medium comprising instructions for performing a method of authenticating a client (106) which uses a password encoding scheme based on a first hash function on a network (108) using an authentication scheme based on a second hash function, the method including the steps of:
associating with an access point;
responding to an access point identity request;
encoding a client password using the first hash function to produce a first password hash;
performing the second hash function on the first password hash, thereby creating a second password hash; and
authenticating the client (106) on the network (108) using the second password hash.

13. A computer-readable medium according to Claim 12, further adapted to perform a method according to any of Claims 1 to 5 and 7 to 9.

14. An authentication server (110), comprising:
means for receiving an authentication request from a client (106);
means for accessing an accounts database (216) providing user passwords encoded according to a first hash function, wherein the authentication request can be verified via the database, the database returning a first password hash; and
means for performing a second hash function on the first password hash, creating a second password hash;
wherein the authentication server (110) uses the second password hash to authenticate the client (106).

15. The authentication server of claim 14 wherein the accounts database (216) is located at a remote location from the authentication server (110).

16. The authentication server of claim 14 or 15 wherein the client (106) is authenticated by a lightweight extensible authentication protocol.

17. An authentication server according to any of Claims 14 to 16, wherein the second hash function is an MD4 or MD5 hash function.

18. An authentication server according to any of Claims 14 to 17, wherein the first hash function is a SHA-1 hash function.

19. A client device (106) adapted to encode a password using a first hash function and comprising means for performing authentication on a network (108) using an authentication scheme based on a second hash function, the device comprising:
means for generating a password encoded according to the first hash function;
means for performing the second hash function on the encoded password to produce a password hash of the encoded password; and
means for authenticating the client (106) on the network (108) using the password hash.

20. The client device of Claim 19 wherein the authenticating means is adapted to use a lightweight extensible authentication protocol.

21. A client device according to Claim 19 or 20, wherein the second hash function is an MD4 or MD5 hash function.

22. An authentication server according to any of Claims 19 to 21, wherein the first hash function is a SHA-1 hash function.

23. A client device according to any of Claims 19 to 22, wherein the client device (106) is an 802.11 compatible device.

## Patentansprüche

1. Verfahren zum Authentifizieren eines Client (106) in einer Lightweight Extensible Authentication Protocol - Umgebung, wobei das Verfahren umfasst:
Empfangen von Authentifizierungs-Anfrage-Daten von einem Client (106); Abrufen eines ersten Passwort-Hash eines Benutzer-Passworts, das mit einem Client-Benutzernamen assoziiert ist, der während des Login bereitgestellt wird,
wobei der erste Passwort-Hash mittels einer ersten vorgegebenen Hash-Funktion erstellt worden ist;
Durchführen einer zweiten Hash-Funktion für den ersten Passwort-Hash, wodurch ein zweiter Passwort-Hash erstellt wird; und
Authentifizieren des Client (106) über das Lightweight Extensible Authentication Protocol mittels des zweiten Passwort-Hash.

2. Verfahren nach Anspruch 1, wobei die Authentifizierungs-Anfrage mittels eines vorgegebenen Codierschemas codiert wird.

3. Verfahren nach Anspruch 1 oder 2, das das Abrufen des ersten Passwort-Hash von einer Account-Datenbank (216) umfasst.

4. Verfahren nach Anspruch 3, wobei der Authentifizierungs-Server Zugriff auf eine Vielzahl alternativer Datenbanken hat, wobei das Verfahren des Weiteren das Anpassen des Codierschemas der Authentifizierungs-Anfrage an eine der Vielzahl alternativer Datenbanken umfasst.

5. Verfahren nach einem der vorhergehenden Ansprüche, das des Weiteren umfasst:
Ermitteln des von dem Client (106) verwendeten Codierschemas;
Zugreifen auf eine ausgewählte Account-Datenbank in Abhängigkeit von dem ermittelten Codierschema und Abrufen des ersten Passwort-Hash von der ausgewählten Datenbank; und
Durchführen der zweiten Hash-Funktion für den abgerufenen ersten Passwort-Hash, wenn ermittelt worden ist, dass das Codierschema die zweite Hash-Funktion nicht verwendet.

6. Verfahren nach einem der vorhergehenden Ansprüche, wobei der Client ein Passwort-Codierschema basierend auf der ersten Hash-Funktion verwenden kann, wobei die Schritte bei dem Client (106) umfassen:
Assoziieren mit einem Zugriffspunkt (102);
Ansprechen auf eine Zugriffspunkt-Identitätsanfrage;
Codieren eines Client-Passworts mittels der ersten Hash-Funktion, um einen ersten Passwort-Hash zu erzeugen;
Durchführen der zweiten Hash-Funktion für den ersten Passwort-Hash, wodurch ein zweiter Passwort-Hash erzeugt wird; und
Authentifizieren des Client (106) in dem Netzwerk (108) mittels des zweiten Passwort-Hash.

7. Verfahren nach einem der vorhergehenden Ansprüche, das das Ableiten eines Sitzungsschlüssels mittels des zweiten Passwort-Hash umfasst.

8. Verfahren nach einem der vorhergehenden Ansprüche, wobei die zweite Hash-Funktion eine MD4 Hash-Funktion oder eine MD5 Hash-Funktion ist.

9. Verfahren nach einem der vorhergehenden Ansprüche, wobei die erste Hash-Funktion eine SHA-1 Hash-Funktion ist.

10. Computerlesbares Medium, das Befehle zum Durchführen eines Verfahrens zum Authentifizieren eines Client (106) in einer Lightweight Extensible Authentication Protocol - Umgebung aufweist, wobei das Verfahren die folgenden Schritte umfasst:
Empfangen von Authentifizierungs-Anfrage-Daten von einem Client (106); Abrufen eines ersten Passwort-Hash eines Benutzer-Passworts, das mit einem Client-Benutzemamen assoziiert ist, der während des Login bereitgestellt wird,
wobei der erste Passwort-Hash mittels einer ersten vorgegebenen Hash-Funktion erstellt worden ist;
Durchführen einer zweiten Hash-Funktion für den ersten Passwort-Hash, wodurch ein zweiter Passwort-Hash erstellt wird; und
Authentifizieren des Client (106) über das Lightweight Extensible Authentication Protocol mittels des zweiten Passwort-Hash.

11. Computerlesbares Medium nach Anspruch 10, das des Weiteren so ausgelegt ist, dass es ein Verfahren nach einem der Ansprüche 2 bis 9 durchführt.

12. Computerlesbares Medium, das Befehle zum Durchführen eines Verfahrens zum Authentifizieren eines Client (106) aufweist, das ein Passwort-Codierschema basierend auf einer ersten Hash-Funktion in einem Netzwerk (108) verwendet, das ein Authentifizierungsschema basierend auf einer zweiten Hash-Funktion verwendet, wobei das Verfahren die folgenden Schritte umfasst:
Assoziieren mit einem Zugriffspunkt;
Ansprechen auf eine Zugriffspunkt-Identitätsanfrage;
Codieren eines Client-Passworts mittels der ersten Hash-Funktion, um einen ersten Passwort-Hash zu erzeugen;
Durchführen der zweiten Hash-Funktion für den ersten Passwort-Hash, wodurch ein zweiter Passwort-Hash erzeugt wird; und
Authentifizieren des Client (106) in dem Netzwerk (108) mittels des zweiten Passwort-Hash.

13. Computerlesbares Medium nach Anspruch 12, das des Weiteren so ausgelegt ist, dass es ein Verfahren gemäß einem der Ansprüche 1 bis 5 und 7 bis 9 durchführt.

14. Authentifizierungs-Server (110), der aufweist:
eine Einrichtung zum Empfangen einer Authentifizierungs-Anfrage von einem Client (106);
eine Einrichtung zum Zugreifen auf eine Account-Datenbank (216), die Benutzer-Passwörter bereitstellt, die gemäß einer ersten Hash-Funktion codiert sind, wobei die Authentifizierungs-Anfrage über die Datenbank verifiziert werden kann, wobei die Datenbank einen ersten Passwort-Hash zurückgibt; und
eine Einrichtung zum Durchführen einer zweiten Hash-Funktion für den ersten Passwort-Hash, wodurch ein zweiter Passwort-Hash erstellt wird;
wobei der Authentifizierungs-Server (110) den zweiten Passwort-Hash zum Authentifizieren des Client (106) verwendet.

15. Authentifizierungs-Server nach Anspruch 14, wobei die Account-Datenbank (216) sich an einer von dem Authentifizierungs-Server (110) entfernten Stelle befindet.

16. Authentifizierungs-Server nach Anspruch 14 oder 15, wobei der Client (106) von einem Lightweight Extensible Authentication Protocol authentifiziert wird.

17. Authentifizierungs-Server nach einem der Ansprüche 14 bis 16, wobei die zweite Hash-Funktion eine MD4 Hash-Funktion oder eine MD5 Hash-Funktion ist.

18. Authentifizierungs-Server nach einem der Ansprüche 14 bis 17, wobei die erste Hash-Funktion eine SHA-1 Hash-Funktion ist.

19. Client-Vorrichtung (106), die so ausgelegt ist, dass sie ein Passwort mittels einer ersten Hash-Funktion codiert, und die eine Einrichtung zum Durchführen von Authentifizierung für ein Netzwerk (108) mittels eines Authentifizierungsschemas, das auf einer zweiten Hash-Funktion basiert, aufweist, wobei die Vorrichtung aufweist:
eine Einrichtung zum Erzeugen eines Passworts, das gemäß der ersten Hash-Funktion codiert ist;
eine Einrichtung zum Durchführen der zweiten Hash-Funktion für das codierte Passwort, um einen Passwort-Hash des codierten Passworts zu erzeugen; und
eine Einrichtung zum Authentifizieren des Client (106) in dem Netzwerk (108) mittels des Passwort-Hash.

20. Client-Vorrichtung nach Anspruch 19, wobei die Einrichtung zum Authentifizieren so ausgelegt ist, dass sie ein Lightweight Extensible Authentication Protocol verwendet.

21. Client-Vorrichtung nach Anspruch 19 oder 20, wobei die zweite Hash-Funktion eine MD4 Hash-Funktion oder eine MD5 Hash-Funktion ist.

22. Authentifizierungs-Server nach einem der Ansprüche 19 bis 21, wobei die erste Hash-Funktion eine SHA-1 Hash-Funktion ist.

23. Client-Vorrichtung nach einem der Ansprüche 19 bis 22, wobei die Client-Vorrichtung (106) eine 802.11-kompatible Vorrichtung ist.

## Revendications

1. Procédé d'authentification d'un client (106) dans un Environnement de Protocole d'Authentification Extensible Léger, le procédé comprenant :
la réception de données de demande d'authentification en provenance d'un client (106) ;
l'extraction d'un premier hachage de mot de passe d'un mot de passe utilisateur associé à un nom d'utilisateur de client fourni au cours de la procédure de connexion, le premier hachage de mot de passe ayant été créé en utilisant une première fonction de hachage prédéterminée ;
l'exécution d'une seconde fonction de hachage sur le premier hachage de mot de passe, en créant ainsi un second hachage de mot de passe ; et
l'authentification du client (106) par l'intermédiaire du Protocole d'Authentification Extensible Léger en utilisant le second hachage de mot de passe.

2. Procédé selon la revendication 1, dans lequel la demande d'authentification est codée en utilisant un système de codage prédéterminé.

3. Procédé selon la revendication 1 ou 2, comprenant l'extraction du premier hachage de mot de passe à partir d'une base de données de comptes (216).

4. Procédé selon la revendication 3, dans lequel le serveur d'authentification a accès à une pluralité de bases de données alternatives, le procédé comprenant en outre la mise en correspondance du système de codage de la demande d'authentification avec celui de la pluralité de bases de données alternatives.

5. Procédé selon l'une quelconque des revendications précédentes, comprenant en outre :
la détermination du système de codage utilisé par le client (106) ;
l'accès à une base de données de comptes sélectionnée en fonction du système de codage déterminé et l'extraction du premier hachage de mot de passe à partir de la base de données sélectionnée ; et
l'exécution de la seconde fonction de hachage sur le premier hachage de mot de passe extrait quand il est déterminé que le système de codage n'utilise pas la seconde fonction de hachage.

6. Procédé selon l'une quelconque des revendications précédentes, dans lequel le client est adapté pour utiliser un système de codage de mot de passe basé sur la première fonction de hachage, les étapes comprenant, au niveau du client (106) :
l'association à un point d'accès (102) ;
la réponse à une demande d'identité de point d'accès ;
le codage d'un mot de passe client en utilisant la première fonction de hachage de manière à produire un premier hachage de mot de passe ;
l'exécution de la seconde fonction de hachage sur le premier hachage de mot de passe, en créant ainsi un second hachage de mot de passe ; et
l'authentification du client (106) sur le réseau (108) en utilisant le second hachage de mot de passe.

7. Procédé selon l'une quelconque des revendications précédentes, comprenant l'obtention d'une clé de session en utilisant le second hachage de mot de passe.

8. Procédé selon l'une quelconque des revendications précédentes, dans lequel la seconde fonction de hachage est une fonction de hachage MD4 ou MD5.

9. Procédé selon l'une quelconque des revendications précédentes, dans lequel la première fonction de hachage est une fonction de hachage SHA-1.

10. Support pouvant être lu par un ordinateur comprenant des instructions destinées à exécuter un procédé d'authentification d'un client (106) dans un Environnement de Protocole d'Authentification Extensible Léger, le procédé comprenant les étapes suivantes :
recevoir des données de demande d'authentification en provenance d'un client (106) ;
extraire un premier hachage de mot de passe d'un mot de passe utilisateur associé à un nom d'utilisateur de client fourni au cours de la procédure de connexion, le premier hachage de mot de passe ayant été créé en utilisant une première fonction de hachage prédéterminée ;
exécuter une seconde fonction de hachage sur le premier hachage de mot de passe, en créant ainsi un second hachage de mot de passe ; et
authentifier le client (106) par l'intermédiaire du Protocole d'Authentification Extensible Léger en utilisant le second hachage de mot de passe.

11. Support pouvant être lu par un ordinateur selon la revendication 10, adapté en outre pour exécuter un procédé selon l'une quelconque des revendications 2 à 9.

12. Support pouvant être lu par un ordinateur comprenant des instructions pour exécuter un procédé d'authentification d'un client (106) qui utilise un système de codage de mot de passe basé sur une première fonction de hachage sur un réseau (108) en utilisant un système d'authentification basé sur une seconde fonction de hachage, le procédé comprenant les étapes suivantes :
procéder à une association à un point d'accès (102) ;
répondre à une demande d'identité de point d'accès ;
coder un mot de passe client en utilisant la première fonction de hachage de manière à produire un premier hachage de mot de passe ;
exécuter la seconde fonction de hachage sur le premier hachage de mot de passe, en créant ainsi un second hachage de mot de passe ; et
authentifier le client (106) sur le réseau (108) en utilisant le second hachage de mot de passe.

13. Support pouvant être lu par un ordinateur selon la revendication 12, adapté en outre pour exécuter un procédé selon l'une quelconque des revendications 1 à 5 et 7 à 9.

14. Serveur d'authentification (110), comprenant :
des moyens pour recevoir une demande d'authentification en provenance d'un client (106) ;
des moyens pour accéder à une base de données de comptes (216) fournissant des mots de passe utilisateurs codés selon une première fonction de hachage, dans lequel la demande d'authentification peut être vérifiée par l'intermédiaire de la base de données, la base de données renvoyant un premier hachage de mot de passe ; et
des moyens pour exécuter une seconde fonction de hachage sur le premier hachage de mot de passe, en créant un second hachage de mot de passe ;
dans lequel le serveur d'authentification (110) utilise le second hachage de mot de passe pour authentifier le client (106).

15. Serveur d'authentification selon la revendication 14, dans lequel la base de données de comptes (216) se situe au niveau d'un emplacement distant vis-à-vis du serveur d'authentification (110).

16. Serveur d'authentification selon la revendication 14 ou 15, dans lequel le client (106) est authentifié par un protocole d'authentification extensible léger.

17. Serveur d'authentification selon l'une quelconque des revendications 14 à 16, dans lequel la seconde fonction de hachage est une fonction de hachage MD4 ou MD5.

18. Serveur d'authentification selon l'une quelconque des revendications 14 à 17, dans lequel la première fonction de hachage est une fonction de hachage SHA-1.

19. Dispositif client (106) adapté pour coder un mot de passe en utilisant une première fonction de hachage et comprenant des moyens pour exécuter une authentification sur un réseau (108) en utilisant un système d'authentification basé sur une seconde fonction de hachage, le dispositif comprenant :
des moyens pour générer un mot de passe codé selon la première fonction de hachage ;
des moyens pour exécuter la seconde fonction de hachage sur le mot de passe codé de manière à produire un hachage de mot de passe du mot de passe codé ; et
des moyens pour authentifier le client (106) sur le réseau (108) en utilisant le hachage de mot de passe.

20. Dispositif client selon la revendication 19, dans lequel les moyens d'authentification sont adaptés pour utiliser un protocole d'authentification extensible léger.

21. Dispositif client selon la revendication 19 ou 20, dans lequel la seconde fonction de hachage est une fonction de hachage MD4 ou MD5.

22. Serveur d'authentification selon l'une quelconque des revendications 19 à 21, dans lequel la première fonction de hachage est une fonction de hachage SHA-1.

23. Dispositif client selon l'une quelconque des revendications 19 à 22, dans lequel le dispositif client (106) est un dispositif compatible 802.11.
